# EUROPÄISCHE PATENTSCHRIFT

(11) **EP 1 311 621 B1**
(45) Veröffentlichungstag und Bekanntmachung des Hinweises auf die Patenterteilung: **23.08.2006**
(21) Anmeldenummer: 01965189.2
(22) Anmeldetag: 11.08.2001
(51) Int. Cl.: C09B 62/008, C09B 62/245, C09B 62/085, C09B 62/51

(54) **REAKTIVE AZOFARBSTOFFE, VERFAHREN ZU IHRER HERSTELLUNG UND IHRE VERWENDUNG**
REACTIVE AZO DYE, METHOD FOR THE PRODUCTION AND USE THEREOF
COLORANTS AZOIQUES REACTIFS, LEUR PROCEDE DE FABRICATION ET LEUR UTILISATION

(30) Priorität: 19.08.2000 DE 10040648
(43) Veröffentlichungstag der Anmeldung: 21.05.2003
(73) Patentinhaber: DyStar Textilfarben GmbH & Co. Deutschland KG, 65926 Frankfurt am Main (DE)
(72) Erfinder: MEIER, Stefan, 60529 Frankfurt am Main (DE); RUSS, Werner, 65439 Flörsheim (DE); WÖRNER, Jörg, 63468 Bruchköbel (DE)
(86) Internationale Anmeldenummer: PCT/EP2001/009310
(87) Internationale Veröffentlichungsnummer: WO 2002/016504

(56) Entgegenhaltungen:
- WO-A-96/10610
- DE-A- 19 810 906

## Beschreibung

Die vorliegende Erfindung liegt auf dem Gebiet der faserreaktiven Farbstoffe. Aus den Dokumenten WO 9610610, WO 9725377, WO 9947608 und EP-A 922735 sind bereits Farbstoffe bekannt, die mit den nachfolgend beschriebenen erfindungsgemäßen Farbstoffen strukturelle Ähnlichkeiten aufweisen, sich aber bezüglich der Reaktivanker oder in der Art der Kupplungskomponente unterscheiden. Diese bekannten Farbstoffe weisen eine Reihe von technischen Nachteilen beim Färben von Textilmaterialien auf, die es zu verbessern galt.

Überraschenderweise wurde nun gefunden, daß sich die nachfolgenden Farbstoffe der allgemeinen Formel (I) vorteilhaft von den bekannten Farbstoffen abheben.

Die vorliegende Erfindung betrifft Reaktivfarbstoffe der allgemeinen Formel (1) 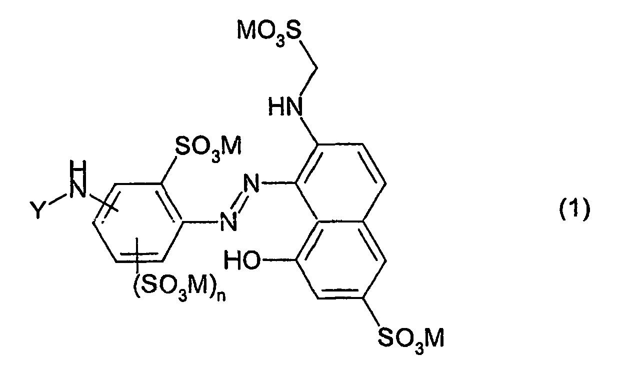 worin
- Y: für eine heterocyclische Reaktivgruppe der allgemeinen Formel (2) oder (3) 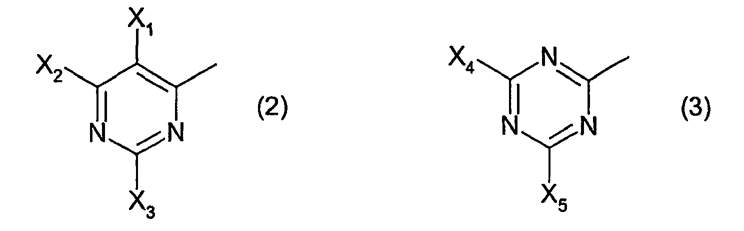 steht, worin
X₁ bis X₃ unabhängig voneinander Wasserstoff, Cyano oder Halogen bedeuten, mit der Maßgabe, dass wenigstens ein Rest X₁ bis X₃ Halogen ist,
X₄ Fluor oder X₅ bedeutet,
X₅ für eine Gruppe der allgemeinen Formel (4) steht 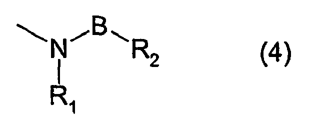 worin
R₁ Wasserstoff, Alkyl oder Aryl bedeuten;
B Alkylen, Arylen oder Arylalkylen, wobei Alkylen auch durch ein Sauerstoffatom unterbrochen sein kann, bedeuten; und
R₂ einen Rest -SO₂CH = CH₂ oder -SO₂CH₂CH₂Z bedeutet, worin Z für eine Gruppierung steht, die durch Einwirkung von Alkali eliminiert werden kann;
- n: für 0 oder 1 steht; und
- M: für Wasserstoff, Ammonium, ein Alkalimetall oder das Äquivalent eines Erdalkalimetalls steht.

In der allgemeinen Formel (I) kann ein für M stehendes Alkalimetall insbesondere Lithium, Natrium und Kalium sein, während als Erdalkalimetall insbesondere Calcium in Frage kommt. Bevorzugt steht M für Wasserstoff oder Natrium.
Für X₁ bis X₃ stehendes Halogen bedeutet insbesondere Fluor oder Chlor.
Für R₁ stehendes Alkyl ist bevorzugt (C₁-C₈)-Alkyl und besonders bevorzugt (C₁-C₄)-Alkyl. Beispiele für derartige Alkylgruppen sind Methyl, Ethyl, n-Propyl, i-Propyl, n-Butyl, i-Butyl, sek.-Butyl und tert.-Butyl.
Für R₁ stehendes Aryl ist insbesondere Phenyl, das auch durch zum Beispiel (C₁-C₄)-Alkyl, (C₁-C₄)-Alkoxy, Chlor, Fluor oder die SO₃H-Gruppe ein- oder mehrfach substituiert sein kann.
Bevorzugt steht R¹ für Wasserstoff, Methyl oder Phenyl.
Für B stehendes Alkylen ist bevorzugt (C₁-C₈)-Alkylen und besonders bevorzugt (C₁-C₄)-Alkylen. Beispiele für derartige Alkylengruppen sind Methylen, Ethylen, n-Propylen, i-Propylen und Butylen. Ein durch ein Sauerstoffatom unterbrochenes Alkylen ist bevorzugt die Gruppe -(CH₂)₂-O-(CH₂)₂-.
Für B stehendes Arylen ist insbesondere Phenylen und Naphthylen, wobei meta- und para-Phenylen bevorzugt sind.
Für B stehendes Arylalkylen ist bevorzugt eine Gruppe der allgemeinen Formeln (5a) oder (5b) 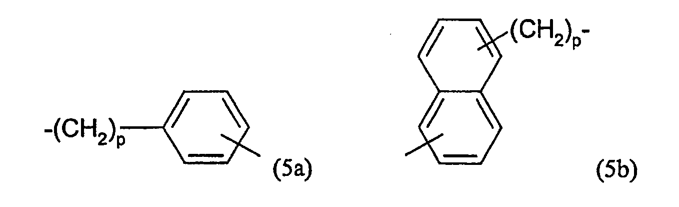 worin p für eine Zahl von 1 bis 4 steht und die freie Valenz am aromatischen Kern sowohl an N, als auch an R₂ gebunden sein kann.
Für Z stehende Reste, die durch Einwirkung von Alkali, d.h. also unter Färbebedingungen, eliminiert werden können, sind beispielsweise Chlor, Brom, Sulfato, Thiosulfato, Phosphato, (C₂-C₅)-Alkanoyloxy wie z.B. Acetyloxy, Benzoyloxy, Sulfobenzoyloxy oder p-Toluylsulfonyloxy, wobei Sulfato bevorzugt ist.

Die Gruppen "Sulfato", "Thiosulfato" und "Phosphato" schließen sowohl deren Säureform als auch deren Salzform ein. Demgemäß entsprechen Thiosulfatogruppen der allgemeinen Formel -S-SO₃M, Phosphatogruppen der allgemeinen Formel -OPO₃M₂ und Sulfatogruppen der allgemeinen Formel -OSO₃M, in welchen M die obengenannte Bedeutung besitzt.
n steht besonders bevorzugt für 0.

Bevozugte erfindungsgemäße Reaktivfarbstoffe sind solche der allgemeinen Formel (1a) 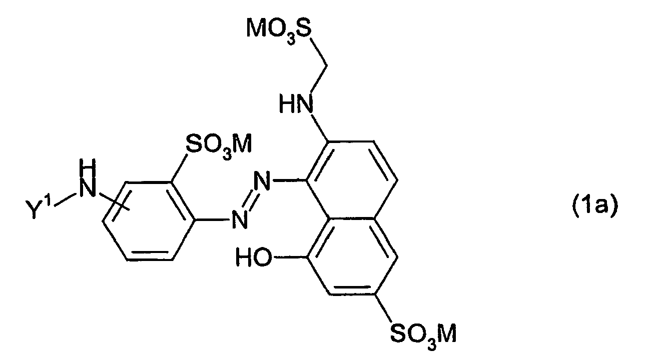 worin M wie oben angegeben definiert ist und Y¹ für einen der Reste (2a) bis (2i) 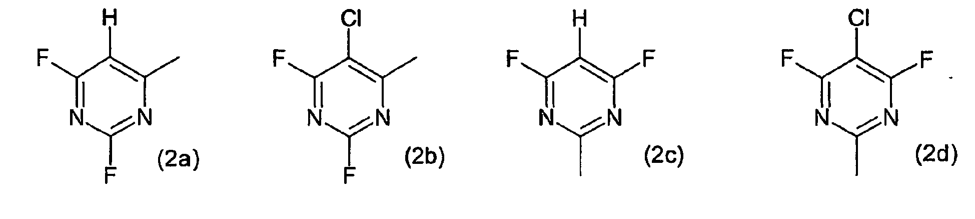 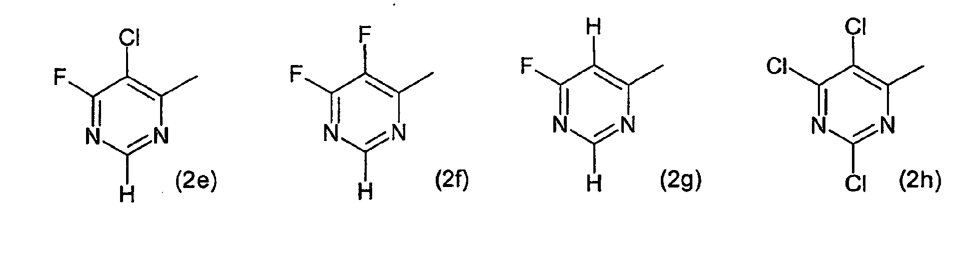 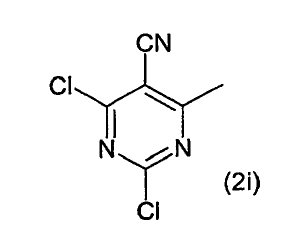 oder (3a) bis (3l) steht 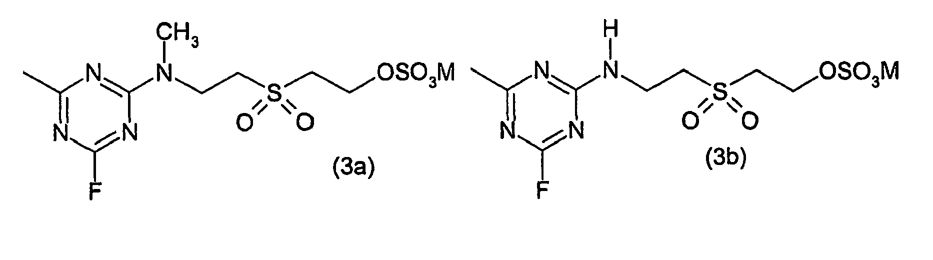 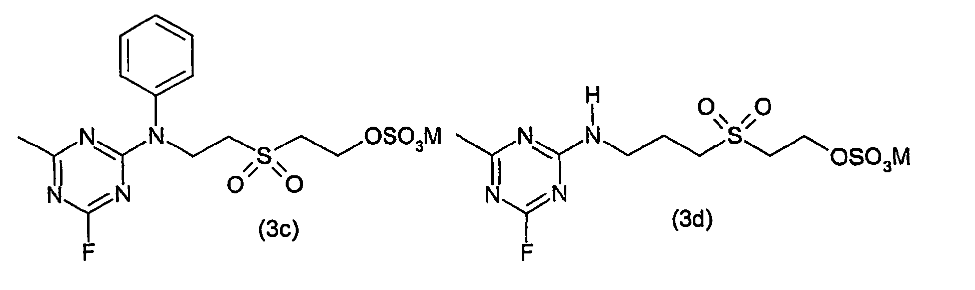 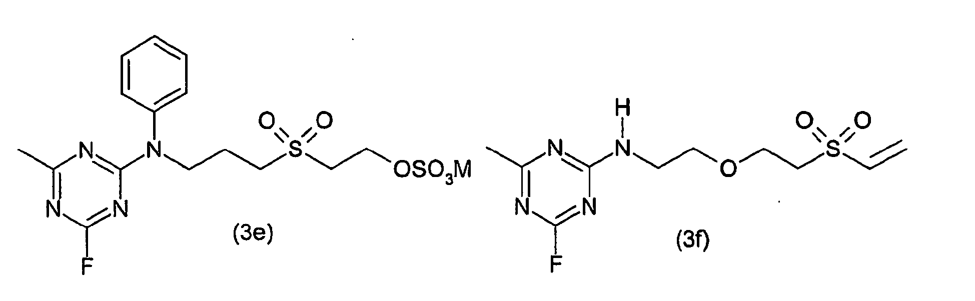 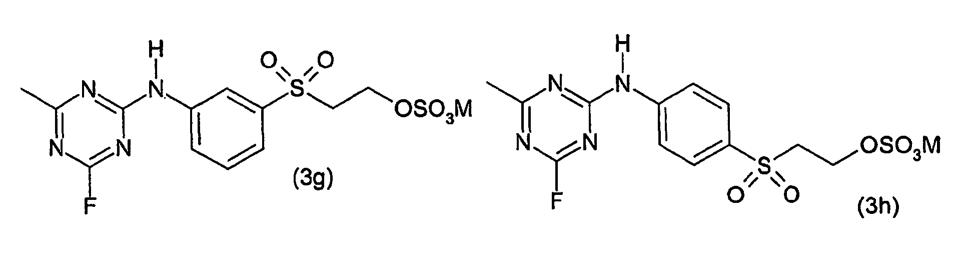 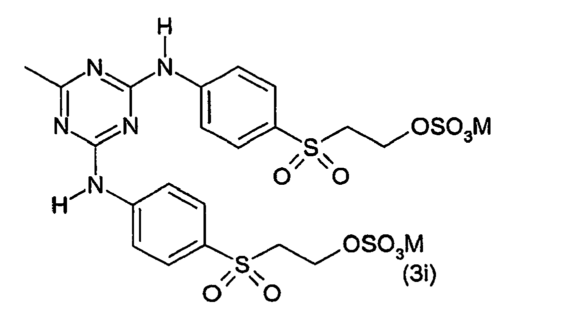 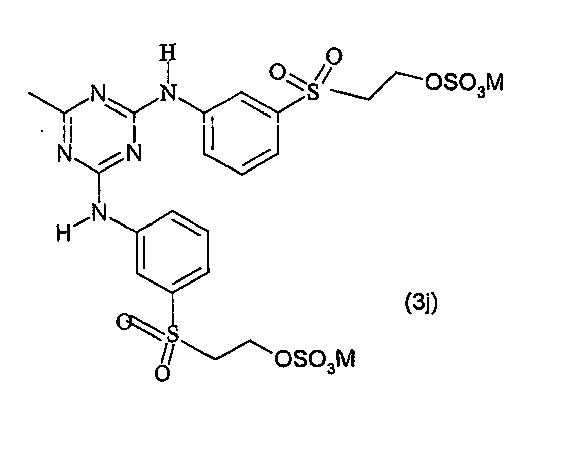 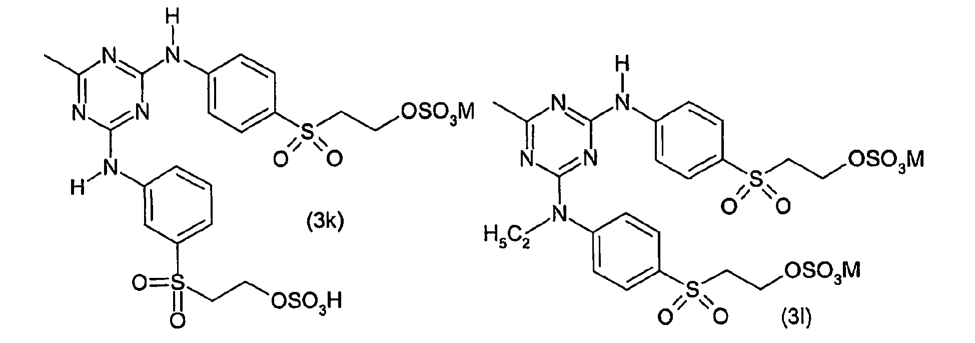 wobei M wie oben angegeben definiert ist

Besonders bevorzugt sind die erfindungsgemäßen Farbstoffe der Formeln (1b) bis (1e) 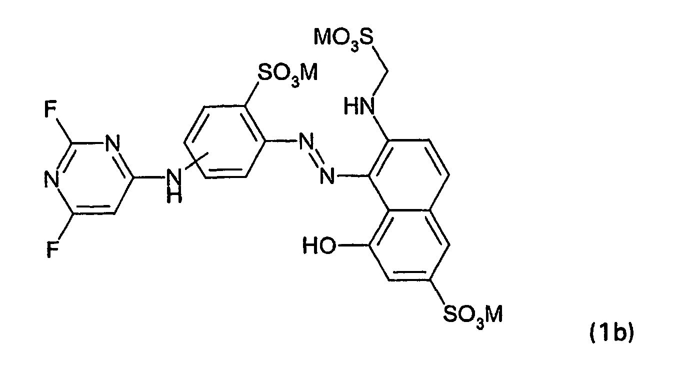 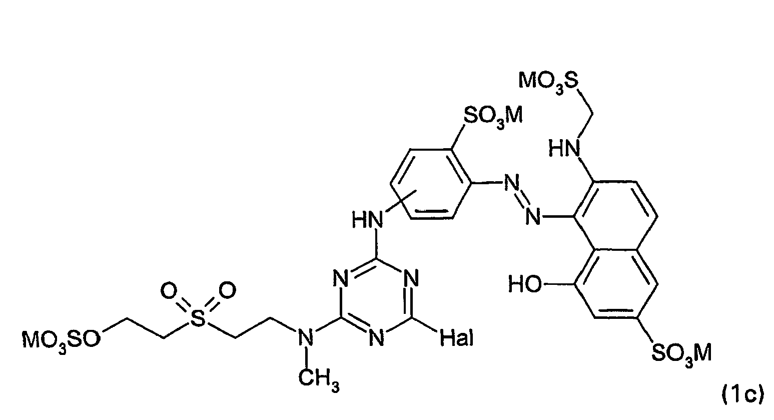 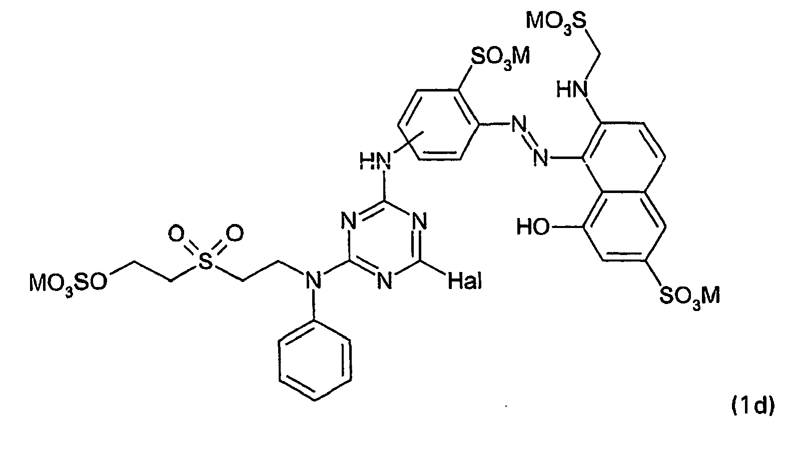 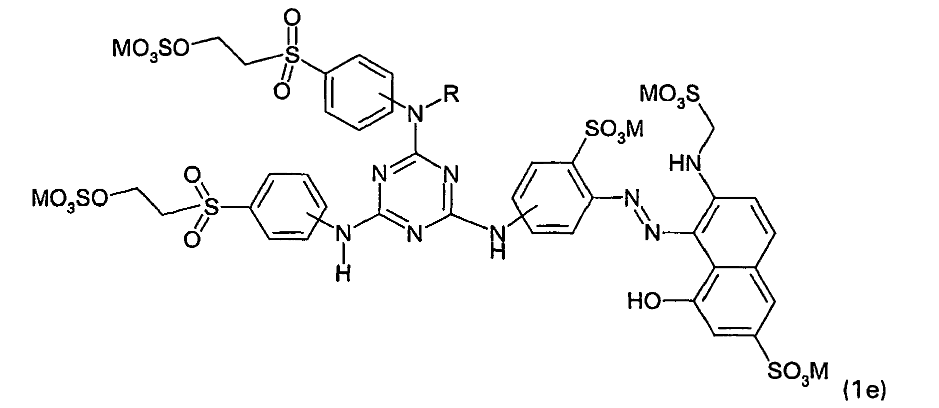 worin R Wasserstoff, Methyl oder Ethyl und Hal Fluor bedeutet und wobei jeweils M wie oben angegeben definiert ist.

Erfindungsgemäße Reaktivfarbstoffe der allgemeinen Formel (1), in denen Y für eine Reaktivgruppe der allgemeinen Formel (2) steht, können in Mischungen untereinander vorliegen, in denen sich die Einzelfarbstoffe insbesondere nur in der Reaktivgruppe der allgemeinen Formel (2) unterscheiden. Bevorzugte Mischungen dieser Art enthalten z.B. einen Reaktivfarbstoff der allgemeinen Formel (1) mit Y = (2a) und einen Reaktivfarbstoff der allgemeinen Formel (1) mit Y = (2c) oder einen Reaktivfarbstoff der allgemeinen Formel (1) mit Y = (2b) und einen Reaktivfarbstoff der allgemeinen Formel (1) mit Y = (2d).

Die erfindungsgemäßen Reaktivfarbstoffe der allgemeinen Formel (I) liegen in der Regel als Präparation in fester oder in flüssiger (gelöster) Form vor. In fester Form enthalten sie im allgemeinen die bei wasserlöslichen und insbesondere faserreaktiven Farbstoffen üblichen Elektrolytsalze, wie Natriumchlorid, Kaliumchlorid und Natriumsulfat, und können desweiteren die in Handelsfarbstoffen üblichen Hilfsmittel enthalten, wie Puffersubstanzen, die einen pH-Wert in wäßriger Lösung zwischen 3 und 7 einzustellen vermögen, wie Natriumacetat, Natriumborat, Natriumhydrogencarbonat, Natriumdihydrogenphosphat, Natriumtricitrat und Dinatriumhydrogenphosphat, geringe Mengen an Sikkativen oder, falls sie in flüssiger, wäßriger Lösung (einschließlich des Gehaltes von Verdickungsmitteln, wie sie bei Druckpasten üblich sind) vorliegen, Substanzen, die die Haltbarkeit dieser Präparationen gewährleisten, wie beispielsweise schimmelverhütende Mittel.
Bevorzugt liegen die erfindungsgemäßen Reaktivfarbstoffe der allgemeinen Formel (I) als Farbstoffpulver oder als Farbstoffgranulat mit einem Gehalt von 10 bis 80 Gew.-%, bezogen auf das Pulver bzw. das Granulat, an einem Elektrolytsalz, das auch als Stellmittel bezeichnet wird, vor. Granulate weisen insbesondere Korngrößen von 50 bis 500 µm auf. Diese festen Präparationen können zudem die erwähnten Puffersubstanzen in einer Gesamtmenge von bis zu 10 Gew.-%, bezogen auf die Präparation enthalten. Sofern die Farbstoffe in wäßriger Lösung vorliegen, so beträgt der Gesamtfarbstoffgehalt in diesen wäßrigen Lösungen bis zu etwa 50 Gew.-%, wie beispielsweise zwischen 5 und 50 Gew.-%., wobei der Elektrolytsalzgehalt in diesen wäßrigen Lösungen bevorzugt unterhalb 10 Gew.-%, bezogen auf die wäßrige Lösung, beträgt. Die wäßrigen Lösungen (Flüssigpräparationen) können die erwähnten Puffersubstanzen in der Regel in einer Menge von bis zu 10 Gew.-%, bevorzugt bis zu 2 Gew.-%, enthalten.

Erfindungsgemäße Reaktivfarbstoffe der allgemeinen Formel (1), in denen Y für eine Gruppe der allgemeinen Formel 3 steht, können bei gleichem Chromophor hinsichtlich der faserreaktiven Gruppe R₂ unterschiedliche Struktur besitzen. Insbesondere kann bei gleichem Chromophor R₂ zum einen -SO₂CH=CH₂ und zum anderen -SO₂CH₂CH₂Z, besonders bevorzugt β-Sulfatoethylsulfonyl, bedeuten. Dabei kann der Anteil des Farbstoffes in Vinylsulfonyl-Form bei bis zu etwa 30 Mol-%, bezogen auf den jeweiligen Farbstoffchromophor, liegen. Bevorzugt liegt der Anteil an Vinylsulfonyl-Farbstoff zu β-ethylsubstituiertem Farbstoff im Molverhältnis zwischen 5:95 und 30:70 liegt.

Gegenstand der vorliegenden Erfindung sind ferner Verfahren zur Herstellung der Reaktivfarbstoffe der allgemeinen Formel (1).
Diese können dadurch erhalten werden, daß sie durch Umsetzung der Verbindungen der Formeln (6), (7) und (2') bzw.(6), (7), (4') und Trifluortriazin 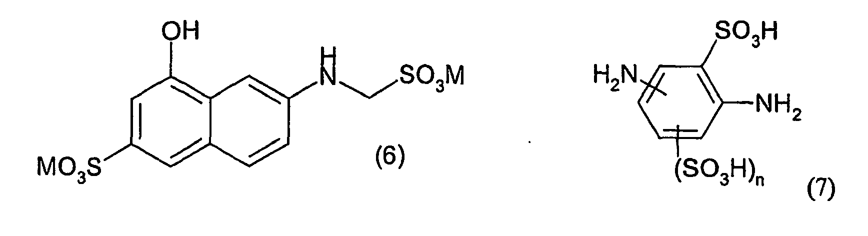 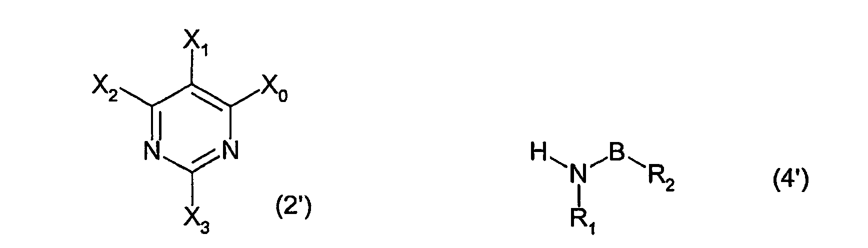 worin M, n, R₁, R₂, B, X₁, X₂, X₃ wie oben angegeben definiert sind und X₀ für Fluor oder Chlor steht, in an sich bekannten Diazotierungs-, Kupplungs- und Kondensationsreaktionen in an sich beliebiger Reihenfolge aufgebaut werden.

So kann beispielsweise eine Verbindung der allgemeinen Formel (8) 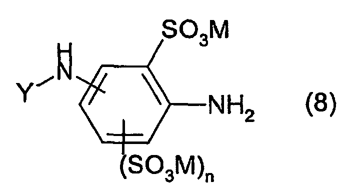 worin Y, M und n wie oben angegeben definiert sind, diazotiert und mit einer Verbindung der Formel (6) umgesetzt werden.

Alternativ kann auch eine Verbindung der allgemeinen Formel (9) 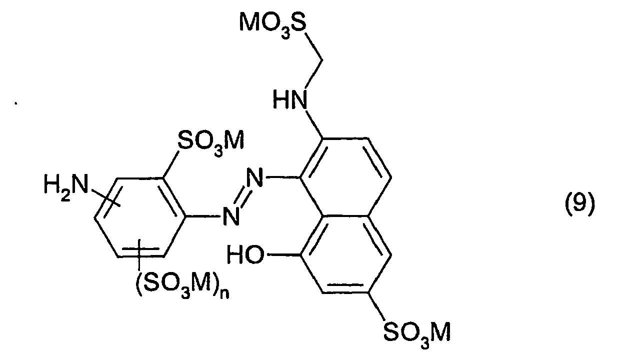 in der M und n wie oben angegeben definiert sind, mit einem Halogenpyrimidin der allgemeinen Formel (2') oder mit einem Triazin der allgemeinen Formel (3') 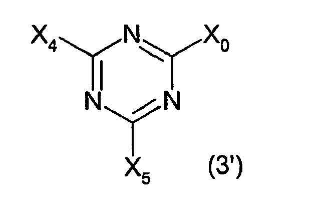 worin X₄ und X₅ wie oben angegeben definiert sind und X₀ Fluor oder Chlor bedeutet, kondensiert werden.

Die Verbindung der allgemeinen Formel (3') wiederum kann aus Trifluortriazin oder Trichlortriazin und einer bzw. zwei Verbindungen der allgemeinen Formel (4') erhalten werden.

Erfindungsgemäße Reaktivfarbstoffe der allgemeinen Formel (1), in denen Y für eine Gruppe der allgemeinen Formel (3) steht, in der X₄ Fluor bedeutet, können auch hergestellt werden durch Umsetzung einer Verbindung der allgemeinen Formel (9) mit Trifluortriazin und anschließender Kondensation mit einem Amin der allgemeinen Formel (4').

Erfindungsgemäße Reaktivfarbstoffe der allgemeinen Formel (1), in denen Y für eine Gruppe der allgemeinen Formel (3) steht, in der X₄ gleich X₅ bedeutet, kann man durch Umsetzung von Reaktivfarbstoffen der allgemeinen Formel (1), in denen X₄ gleich Fluor oder Chlor, mit einem Amin der allgemeinen Formel (4') erhalten.

Die Verbindungen der allgemeinen Formel (8) sind auf verschiedenen Wegen zugänglich. Steht Y für einen Rest der allgemeinen Formel (2), so erhält man sie durch Reaktion von Halogenpyrimidinen der allgemeinen Formel (2') mit aromatischen Diaminobenzol-sulfonsäuren, vorzugsweise 1,3-Diaminobenzol-4-sulfonsäure oder 1,4-Diamino-benzol-2-sulfonsäure.
Entspricht Y einem Rest der allgemeinen Formel (3), so erhält man die Verbindungen der allgemeinen Formel (8) durch Umsetzung der Verbindungen der allgemeinen Formel (3') mit aromatischen Diaminobenzol-sulfonsäuren, vorzugsweise 1,3-Diaminobenzol-4-sulfonsäure oder 1,4-Diamino-benzol-2-sulfonsäure.

Die oben genannten Diazotierungs-, Kupplungs- und Kondensationsreaktionen sind dem Fachmann an sich bekannt und können in allgemein üblicher, in der einschlägigen Literatur ausführlich beschriebenen Art und Weise ausgeführt werden..
Die erfindungsgemäßen Farbstoffe der allgemeinen Formel (1) werden bei den oben beschriebene Herstellungsverfahren als Lösung oder Suspension erhalten und können durch Aussalzen isoliert werden. Sie können auch sprühgetrocknet werden, auch ein Eindampfen der Lösung oder Suspension ist möglich.

Die erfindungsgemäßen Reaktivfarbstoffe der allgemeinen Formel (1) besitzen wertvolle anwendungstechnische Eigenschaften. Sie werden zum Färben und Bedrucken von hydroxy- und/oder carbonamidgruppenhaltigen Materialien, beispielsweise in Form von Flächengebilden, wie Papier und Leder oder von Folien, wie beispielsweise aus Polyamid oder in der Masse, wie beispielsweise von Polyamid und Polyurethan, insbesondere aber in Form von Fasern der genannten Materialien verwendet. Bevorzugt werden sie zum Färben und Bedrucken cellulosehaltiger Fasermaterialien aller Art verwendet. Außerdem eignen sie sich auch zum Färben oder Bedrucken von hydroxygruppenhaltigen Fasern, die in Mischgeweben enthalten sind, z. B. von Gemischen aus Baumwolle mit Polyesterfasern oder Polyamidfasern. Es ist auch möglich, mit ihnen Textilien oder Papier nach dem Inkjet-Verfahren zu bedrucken.

Die vorliegende Erfindung betrifft somit auch die Verwendung der erfindungsgemäßen Reaktivfarbstoffe der allgemeinen Formel (I) zum Färben oder Bedrucken der genannten Materialien bzw. Verfahren zum Färben oder Bedrucken solcher Materialien in an und für sich üblichen Verfahrensweisen, bei welchen man einen oder mehrere erfindungsgemäße Reaktivfarbstoffe der allgemeinen Formel (I) als Farbmittel einsetzt.

Vorteilhafterweise können die bei der Synthese anfallenden Lösungen der erfindungsgemäßen Reaktivfarbstoffe der allgemeinen Formel (I), gegebenenfalls nach Zusatz einer Puffersubstanz, gegebenenfalls auch nach Konzentrieren oder Verdünnen, direkt als Flüssigpräparation der färberischen Verwendung zugeführt werden.

Bevorzugt kommen die genannten Materialien in Form von Fasermaterialien zur Anwendung, insbesondere in Form von Textilfasern, wie Geweben oder Garnen, wie in Form von Strängen oder Wickelkörpern.
Hydroxygruppenhaltige Materialien sind solche natürlichen oder synthetischen Ursprungs, wie beispielsweise Cellulosefasermaterialien oder deren Regeneratprodukte und Polyvinylalkohole. Cellulosefasermaterialien sind vorzugsweise Baumwolle, aber auch andere Pflanzenfasern, wie Leinen, Hanf, Jute und Ramiefasern. Regenerierte Cellulosefasern sind beispielsweise Zellwolle und Viskosekunstseide.

Carbonamidgruppenhaltige Materialien sind beispielsweise synthetische und natürliche Polyamide und Polyurethane, insbesondere in Form von Fasern, beispielsweise Wolle und andere Tierhaare, Seide, Leder, Polyamid-6,6, Polyamid-6, Polyamid-11 und Polyamid-4.

Die erfindungsgemäßen Reaktivfarbstoffe der allgemeinen Formel (I) lassen sich auf den genannten Substraten, insbesondere auf den genannten Fasermaterialien, nach den für wasserlösliche, insbesondere nach den für faserreaktive Farbstoffe bekannten Anwendungstechniken applizieren und fixieren.
So erhält man mit ihnen auf Cellulosefasern nach den Ausziehverfahren aus langer Flotte unter Verwendung von verschiedensten säurebindenden Mitteln und gegebenenfalls neutralen Salzen, wie Natriumchlorid oder Natriumsulfat, Färbungen mit sehr guten, Farbausbeuten. Man färbt bevorzugt in wäßrigem Bad bei Temperaturen zwischen 40 und 105°C, gegebenenfalls bei einer Temperatur bis zu 130°C unter Druck, und gegebenenfalls in Gegenwart von üblichen Färbereihilfsmitteln. Man kann dabei so vorgehen, daß man das Material in das warme Bad einbringt und dieses allmählich auf die gewünschte Färbetemperatur erwärmt und den Färbeprozeß bei dieser Temperatur zu Ende führt. Die das Ausziehen der Farbstoffe beschleunigenden Neutralsalze können dem Bade gewünschtenfalls auch erst nach Erreichen der eigentlichen Färbetemperatur zugesetzt werden.

Nach dem Klotzverfahren werden auf Cellulosefasern ebenfalls ausgezeichnete Farbausbeuten und ein sehr guter Farbaufbau erhalten, wobei durch Verweilen bei Raumtemperatur oder erhöhter Temperatur, beispielsweise bis zu etwa 60°C, durch Dämpfen oder mit Trockenhitze in üblicher Weise fixiert werden kann.

Ebenfalls nach den üblichen Druckverfahren für Cellulosefasern, die einphasig - beispielsweise durch Bedrucken mit einer Natriumbicarbonat oder ein anderes säurebindendes Mittel enthaltenden Druckpaste und anschließendes Dämpfen bei 100 bis 103°C, - oder zweiphasig - beispielsweise durch Bedrucken mit neutraler oder schwach saurer Druckfarbe und anschließendem Fixieren entweder durch Hindurchführen durch ein heißes elektrolythaltiges alkalisches Bad oder durch Überklotzen mit einer alkalischen elektrolythaltigen Klotzflotte und anschließendem Verweilen oder Dämpfen oder Behandlung mit Trockenhitze des alkalisch überklotzten Materials, - durchgeführt werden können, erhält man farbstarke Drucke mit gutem Stand der Konturen und einem klaren Weißfond. Der Ausfall der Drucke ist von wechselnden Fixierbedingungen nur wenig abhängig.

Bei der Fixierung mittels Trockenhitze nach den üblichen Thermofixierverfahren verwendet man Heißluft von 120 bis 200°C. Neben dem üblichen Wasserdampf von 101 bis 103°C kann auch überhitzter Dampf und Druckdampf von Temperaturen bis zu 160°C eingesetzt werden.

Die säurebindenden und die Fixierung der Farbstoffe auf den Cellulosefasern bewirkenden Mittel sind beispielsweise wasserlösliche basische Salze der Alkalimetalle und ebenfalls Erdalkalimetalle von anorganischen oder organischen Säuren oder Verbindungen, die in der Hitze Alkali freisetzen. Insbesondere sind die Alkalimetallhydroxide und Alkalimetallsalze von schwachen bis mittelstarken anorganischen oder organischen Säuren zu nennen, wobei von den Alkaliverbindungen vorzugsweise die Natrium- und Kaliumverbindungen gemeint sind. Solche säurebindenden Mittels sind beispielsweise Natriumhydroxid, Kaliumhydroxid, Natriumcarbonat, Natriumbicarbonat, Kaliumcarbonat, Natriumformiat, Natriumdihydrogenphosphat, Dinatriumhydrogenphosphat, Natriumtrichloracetat, Wasserglas oder Trinatriumphosphat.
Die erfindungsgemäßen Reaktivfarbstoffe der allgemeinen Formel (1) zeichnen sich durch hohe Reaktivität, gutes Fixiervermögen, sehr gutes Aufbauvermögen, sowie hohe Licht- und Schweißlichtechtheit aus. Sie können daher nach dem Ausziehfärbeverfahren bei niedrigen Färbetemperaturen eingesetzt werden und erfordern bei Pad-Steam-Verfahren nur kurze Dämpfzeiten. Die Fixiergrade sind hoch, und die nicht fixierten Anteile können leicht ausgewaschen werden, wobei die Differenz zwischen Ausziehgrad und Fixiergrad bemerkenswert klein, d. h. der Seifverlust sehr gering ist. Sie eignen sich auch besonders zum Druck, vor allem auf Baumwolle, ebenso aber auch zum Bedrucken von stickstoffhaltigen Fasern, z. B. von Wolle oder Seide oder von Mischgeweben, die Wolle oder Seide enthalten.

Des weiteren zeichnen sich die erfindungsgemäßen Reaktivfarbstoffe der allgemeinen Formel (1) darin aus, daß sich nach dem Färbeprozeß auf dem Fasermaterial nicht fixierte Farbstoffanteile sehr leicht auswaschen lassen, ohne daß Weißwäsche, die sich mit in dem Waschprozeß befindet, durch den sich ablösenden Farbstoff angeschmutzt wird. Hieraus ergeben sich Vorteile für den Färbeprozeß, in dem Waschzyklen und damit Kosten eingespart werden.

Die mit den erindungsgemäßen Reaktivfarbstoffen der allgemeinen Formel (1) hergestellten Färbungen und Drucke besitzen, insbesondere auf Cellulosefasermaterialien, eine hohe Farbstärke und eine hohe Faser-Farbstoff-Bindungsstabilität sowohl in saurem als auch in alkalischem Bereich, weiterhin eine gute Lichtechtheit und sehr gute Naßechtheitseigenschaften, wie Wasch-, Wasser-, Seewasser-, Überfärbe- und Schweißechtheiten sowie gute Plissierechtheit, Bügelechtheit und Reibechtheit.

Die nachfolgenden Beispiele dienen zur Erläuterung der Erfindung. Die Teile sind Gewichtsteile, die Prozentangaben stellen Gewichtsprozente dar, sofern nicht anders vermerkt. Gewichtsteile beziehen sich zu Volumenteilen wie Kilogramm zu Liter.
Die in den Beispielen formelmäßig beschriebenen Verbindungen sind in Form der freien Säure angegeben. Im allgemeinen werden sie aber in Form ihrer Alkalimetallsalze, wie Lithium-, Natrium oder Kaliumsalze, hergestellt und isoliert und in Form ihrer Salze zum Färben verwendet. Ebenso können die in den nachfolgenden Beispielen, insbesondere Tabellenbeispielen, in Form der freien Säure genannten Ausgangsverbindungen und Komponenten als solche oder in Form ihrer Salze, vorzugsweise Alkalimetallsalze, in die Synthese eingesetzt werden.

Die für die erfindungsgemäßen Farbstoffe angegebenen Absorptionsmaxima (λₘₐₓ) im sichtbaren Bereich wurden anhand ihrer Alkalimetallsalze in wäßriger Lösung ermittelt.

### Beispiel 1

18.8 Teile 1,3-Diaminobenzol-4-sulfonsäure werden in 150 Teilen Wasser suspendiert und durch Zugabe von Lithiumhydroxid-Lösung neutral gelöst. Man kühlt auf 10°C ab und tropft in einer Stunde 17.4 Teile 2,4,6-Trifluor-pyrimidin zu, wobei mit 15 % iger Sodalösung ein pH-Wert von 5.5 gehalten wird. Nach beendeter Zugabe lässt man auf 20° bis 25°C aufwärmen und rührt noch eine Stunde nach. Anschliessend wird filtriert und mit 6.9 Teilen Natriumnitrit versetzt.
Das Filtrat kühlt man durch Einwerfen von Eis auf 10°C ab und tropft es in 30 Minuten auf eine Vorlage von 100 Teilen Eis und 60 Teilen konz. Salzsäure (31%). Man rührt 1 Stunde nach und zerstört den Nitrit-Überschuss durch Zugabe von Amidoschwefelsäure.
23.9 Teile 6-Amino-4-hydroxy-naphthalin-2 sulfonsäure werden in 300 Teilen Wasser durch Zugabe von Natronlauge neutral gelöst. Man erwärmt auf 50°C und trägt 13.4 Teile Formaldehyd-bisulfit (Na-Salz) ein. Nach 30 Minuten Nachrühren kühlt man auf 20°C ab und tropft die Lösung in 30 Minuten in die 10°C-kalte Diazotierung.
Es stellt sich ein pH-Wert von 2.0 bis 2.5 ein. Nach 1 Stunde Nachrühren wird mit Sodalösung auf pH 5.5 gestellt und anschließend mit NaH₂PO₄/Na₂HPO₄ gepuffert. Die erhaltene Lösung wird eingedampft.
Man erhält einen Farbstoff der Formel 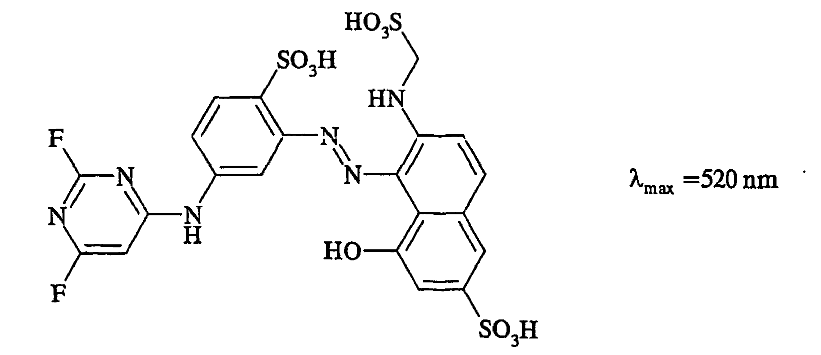 Der Farbstoff färbt und bedruckt Baumwolle in neutralen, roten Tönen mit guten Echtheiten, insbesondere hoher Lichtechtheit.

In analoger Weise wurden die Farbstoffe der nachstehenden Beispiele 2 bis 26 erhalten. Dazu wurde die Pyrimidinverbindung mit der Kondensationskomponente umgesetzt, diazotiert und auf die Verbindung der Formel (7) gekuppelt.

| Bsp. | Pyrimidin | Kondensationskomponente | Farbton | λₘₐₓ |
|---|---|---|---|---|
| 2 | 5-Chlor-2,4,6-trifluorpyrimidin | 1,3-Diaminobenzol-4-sulfonsäure | rot | 521 |
| 3 | 4,5,6-Trifluorpyrimidin | 1,3-Diaminobenzol-4-sulfonsäure | rot | 520 |
| 4 | 5-Chlor-4,6-difluorpyrimidin | 1,3-Diaminobenzol-4-sulfonsäure | rot | 520 |
| 5 | 4,6-Difluorpyrimidin | 1,3-Diaminobenzol-4-sulfonsäure | rot | 521 |
| 6 | 2,4,5,6-Tetrachlorpyrimidin | 1,3-Diaminobenzol-4-sulfonsäure | rot | 520 |
| 7 | 5-Cyan-2,4,6-trichlorpyrimidin | 1,3-Diaminobenzol-4-sulfonsäure | rot | 520 |
| 8 | 5-Chlor-2,4,6-trifluorpyrimidin | 1,4-Diaminobenzol-2-sulfonsäure | rot | 526 |
| 9 | 4,5,6-Trifluorpyrimidin | 1,4-Diaminobenzol-2-sulfonsäure | rot | 525 |
| 10 | 5-Chlor-4,6-difluorpyrimidin | 1,4-Diaminobenzol-2-sulfonsäure | rot | 526 |
| 11 | 4,6-Difluorpyrimidin | 1,4-Diaminobenzol-2-sulfonsäure | rot | 526 |
| 12 | 2,4,5,6-Tetrachlorpyrimidin | 1,4-Diaminobenzol-2-sulfonsäure | rot | 525 |
| 13 | 5-Cyan-2,4,6-trichlorpyrimidin | 1,4-Diaminobenzol-2-sulfonsäure | rot | 527 |
| 14 | 2,4,6-Trifluorpyrimidin | 1,4-Diaminobenzol-2-sulfonsäure | rot | 527 |
| 15 | 5-Chlor-2,4,6-trifluorpyrimidin | 1,3-Diaminobenzol-4,6-disulfonsäure | rot | 521 |
| 16 | 4,5,6-Trifluorpyrimidin | 1,3-Diaminobenzol-4,6-disulfonsäure | rot | 521 |
| 17 | 5-Chlor-4,6-difluorpyrimidin | 1,3-Diaminobenzol-4,6-disulfonsäure | rot | 520 |
| 18 | 2,4,6-Trifluorpyrimidin | 1,3-Diaminobenzol-4,6-disulfonsäure | rot | 521 |
| 19 | 2,4,5,6-Tetrachlorpyrimidin | 1,3-Diaminobenzol-4,6-disulfonsäure | rot | 521 |
| 20 | 5-Cyan-2,4,6-trichlorpyrimidin | 1,3-Diaminobenzol-4,6-disulfonsäure | rot | 521 |
| 21 | 5-Chlor-2,4,6-trifluorpyrimidin | 1,4-Diaminobenzol-2,5-disulfonsäure | rot | 525 |
| 22 | 4,5,6-Trifluorpyrimidin | 1,4-Diaminobenzol-2,5-disulfonsäure | rot | 525 |
| 23 | 5-Chlor-4,6-difluorpyrimidin | 1,4-Diaminobenzol-2,5-disulfonsäure | rot | 526 |
| 24 | 2,4,6-Trifluorpyrimidin | 1,4-Diaminobenzol-2,5-disulfonsäure | rot | 526 |
| 25 | 2,4,5,6-Tetrachlorpyrimidin | 1,4-Diaminobenzol-2,5-disulfonsäure | rot | 526 |
| 26 | 5-Cyan-2,4,6-trichlorpyrimidin | 1,4-Diaminobenzol-2,5-disulfonsäure | rot | 525 |

### Beispiel 27

21.8 Teile 4-Nitroanilin-2-sulfonsäure werden in 400 Teilen Wasser verrührt und mit einer wässrigen NaOH-Lösung neutralisiert. Man gibt 6.9 Teile Natriumnitrit zu und rührt bis zur vollständigen Lösung.

Die erhaltene Lösung tropft man bei 0° bis 5°C auf eine Vorlage von 80 Teilen Eis und 30 Teilen Salzsäure (31%) und rührt 60 Minuten nach. Der Nitrit-Überschuss wird durch Zugabe von Amidoschwefelsäure-Lösung beseitigt. Separat wird eine Lösung von N-Sulfomethylen-Gammasäure wie in Beispiel 1 beschrieben hergestellt und auf 10°C abgekühlt. Diese Lösung gibt man nun zur Suspension des Diazonium-Salzes und stellt den pH-Wert durch Zugabe von Sodalösung auf 2.0 ein.
Man erhält eine Farbstofflösung, die in Form der freien Säure eine Verbindung der Formel (10) 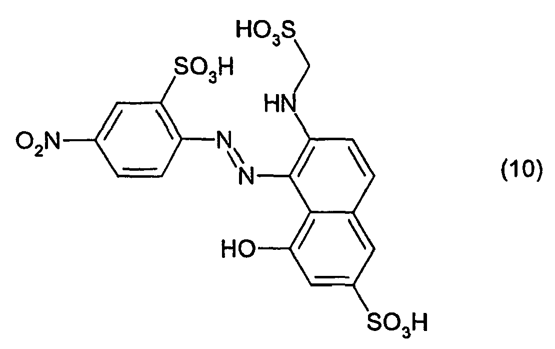 enthält. Die Lösung der Verbindung (10) wird nun auf 35° bis 40°C erwärmt und mit wässriger NaOH auf pH 8.5 eingestellt. Man tropft eine Lösung von 5.6 Teilen NaHS in 50 Teilen Wasser zu und hält dabei den pH-Wert bei 8.5 durch Zugabe von Salzsäure konstant.
Die erhaltene Verbindung wird durch Zusatz von 150 Teilen Natriumchlorid ausgefällt, abfiltriert und mit wässriger Natriumchloridlösung gewaschen.
Die erhaltene Verbindung entspricht in Form ihrer freien Säure der Formel (9a).

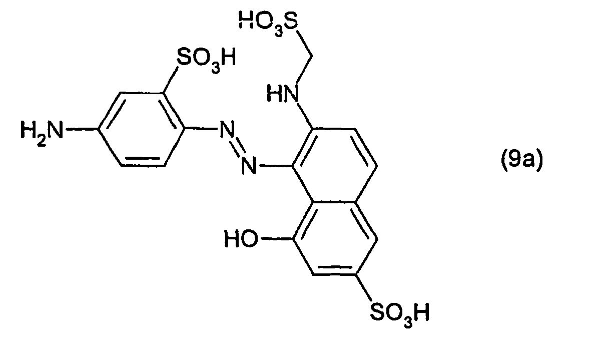

53.2 Teile der Verbindung (9a) werden in 500 Teilen Wasser gelöst. Man kühlt auf 15°C ab und tropft bei dieser Temperatur 13.4 Teile 2,4,6-Trifluorpyrimidin in einer Stunde zu. Der pH-Wert wird dabei durch Zugabe von wässriger Sodalösung bei 6.5 gehalten. Nach beendeter Zugabe rührt man noch eine Stunde bei 30° bis 35°C nach. Der Endpunkt der Reaktion wird durch Dünnschichtchromatographie ermittelt.
Durch Zugabe von Natriumchlorid wird der Farbstoff des Beispiels 14 ausgefällt, abgesaugt und getrocknet. 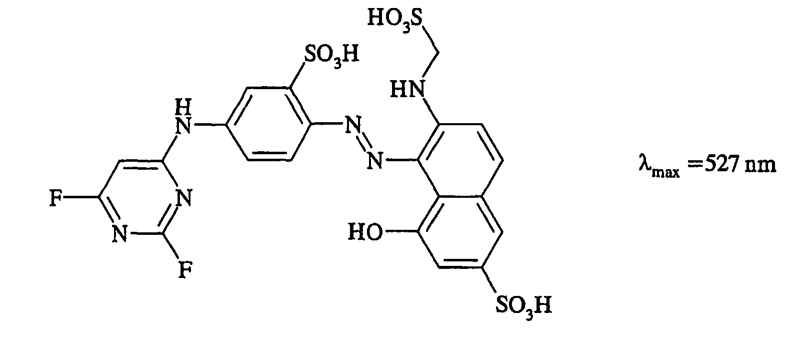 Er färbt Baumwolle mit blaustichig roter Nuance.

In analoger Weise lassen sich die Verbindungen der Formeln der Beispiele 8 bis 13 herstellen, indem man die Verbindung (9a) mit entsprechenden PyrimidinDerivaten kondensiert.

### Beispiel 28

53.2 Teile der Verbindung (9a) werden in 500 Teilen Wasser gelöst. Man gibt 4.2 g Natriumfluorid zu und kühlt auf 5°C ab. Dann tropft man in 5 Minuten 13.5 Teile 2,4,6-Trifluortriazin zu. Der pH-Wert fällt zunächst ab und pendelt sich bei ca. 4.5 bis 5.0 ein. Nach beendeter Zugabe rührt man noch 15 Minuten nach. Zur Reaktionslösung tropft man anschließend eine neutrale, wässrige Lösung von N-Methyl-aminoethyl-2'-sulfatoethylsulfon zu, läßt auf 20° bis 25 °C aufwärmen und hält gleichzeitig den pH-Wert durch Zugabe wässriger SodaLösung bei 6.5 bis 7.0 konstant.

Der Endpunkt der Reaktion wird durch Dünnschichtchromatographie ermittelt. Nach beendeter Reaktion wird der Farbstoff durch Zugabe von Natriumchlorid ausgesalzen, abgesaugt und getrocknet. Er entspricht der Formel 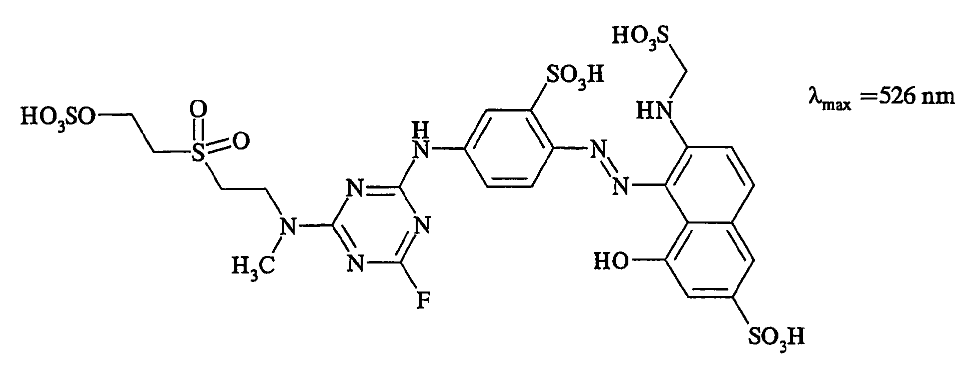 und färbt Baumwolle in stark blaustichig, roten Tönen mit guten Echtheiten, insbesondere hoher Lichtechtheit.

In analoger Weise erhält man die in der nachfolgenden Tabelle angegebenen Beispiele 29 bis 35, indem man zunächst die Farbbase (9a) mit Trifluortriazin bzw. Trichlortriazin umsetzt und anschließend mit einem Amin der allgemeinen Formel (4') kondensiert.

| Bsp. | Amin der Formel (4') | Kondensationskomponente | Farbton | λₘₐₓ |
|---|---|---|---|---|
| 29 | 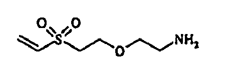 | 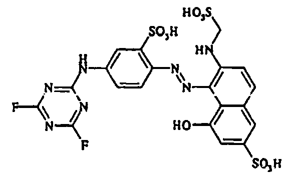 | rot | 526 |
| 30 | 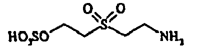 | dto. | rot | 525 |
| 31 | 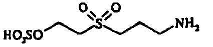 | dto. | rot | 526 |
| 32* | 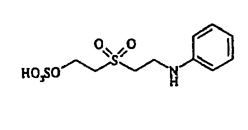 | 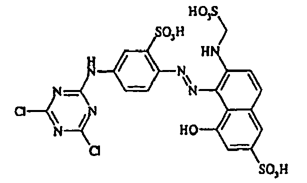 | rot | 525 |
| 33* | 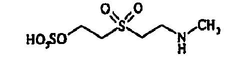 | dto. | rot | 527 |
| 34* 35* | 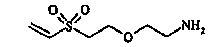 | dto. | rot | 526 |
| | 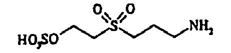 | dto. | rot | 526 |

| | | | | |
|---|---|---|---|---|
| * nicht erfindungsgemäß | | | | |

### Beispiel 36

Man löst 28.1 Teile 4-(2'-Sulfatoethylsulfonyl)-anilin in 250 Teilen Wasser durch Neutralisation mit festem Natriumhydrogencarbonat. In die Lösung gibt man 4.2 Teile Natriumfluorid und kühlt anschließend durch Zugabe von Eis auf 0° bis 5°C ab. Man tropft nun innerhalb von 5 Minuten 13.5 Teile Trifluortriazin zu, wobei der pH-Wert zunächst schnell abfällt und sich anschließend bei 4.5 bis 5.0 einpendelt. Nach beendeter Zugabe rührt man weitere 15 Minuten nach. Dann tropft man eine Lösung von 53.2 Teilen der Verbindung der Formel (9a) in 500 ml Wasser zu und stellt den pH-Wert auf 6.0 bis 6.5 ein. Zur Vervollständigung der Reaktion erwärmt man auf 30° bis 35°C und rührt 60 Minuten nach. Durch Zugabe von Natriumchlorid fällt man den Farbstoff aus, saugt ab und trocknet. Man erhält ein dunkelrotes Farbstoffpulver, dessen Struktur der Formel 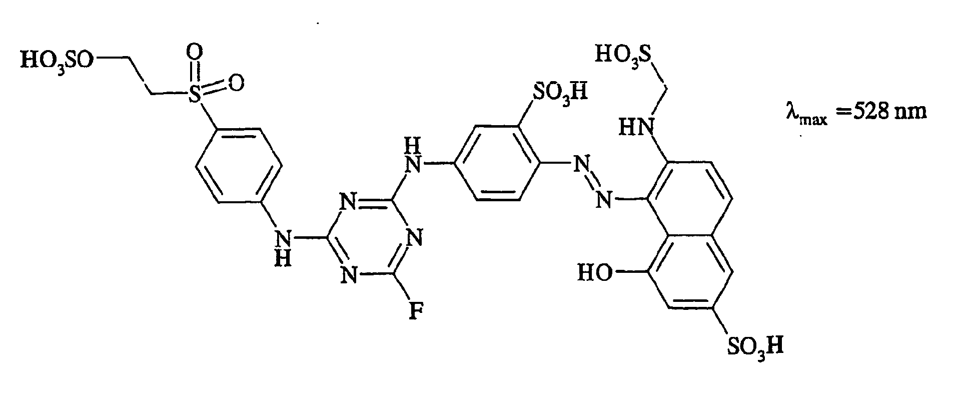 entspricht. Der Farbstoff färbt Baumwolle in stark blaustichig, roten Tönen mit guten Echtheiten, insbesondere hoher Lichtechtheit.

In analoger Weise erhält man die in der nachfolgenden Tabelle angegebenen Beispiele 37 bis 40, indem man zunächst das Amin der allgemeinen Formel (4') mit Trifluortriazin bzw. Trichlortriazin umsetzt und anschließend mit der Verbindung der Formel (9a) kondensiert.

| Bsp | Amin der Formel (4') | Halogen-triazin | Kondensations-komponente | Farbton | λₘₐₓ |
|---|---|---|---|---|---|
| 37 | 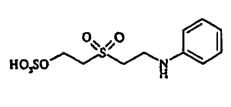 | 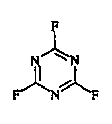 | 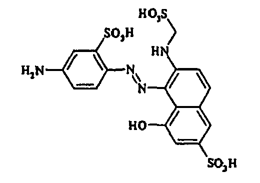 | rot | 527 |
| 38 | 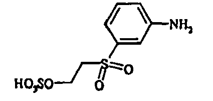 | dto. | dto. | rot | 527 |
| 39* | 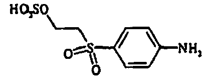 | 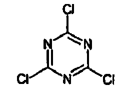 | dto. | rot | 528 |
| 40* | 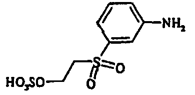 | dto. | dto. | rot | 528 |

| | | | | | |
|---|---|---|---|---|---|
| * nicht erfindungsgemäß | | | | | |

### Beispiel 41

Man löst 28.1 Teile 4-(2'-Sulfatoethylsulfonyl)-anilin in 250 Teilen Wasser durch Neutralisation mit festem Natriumhydrogencarbonat. In die Lösung gibt man 4.2 Teile Natriumfluorid und kühlt anschließend durch Zugabe von Eis auf 0° bis 5°C ab. Man tropft nun innerhalb von 5 Minuten 13.5 Teile Trifluortriazin zu, wobei der pH-Wert zunächst schnell abfällt und sich anschließend bei 4.5 bis 5.0 einpendelt. Nach beendeter Zugabe rührt man weitere 15 Minuten nach. Dann tropft man eine neutralisierte Lösung von 18.8 Teilen 1,3-Diaminobenzol-4-sulfonsäure in Wasser zu und stellt den pH-Wert auf 6.0 bis 6.5 ein. Zur Vervollständigung der Reaktion erwärmt man auf 30° bis 35°C und rührt 60 Minuten nach. Die erhaltene Lösung wird filtriert und mit 6.9 Teilen Natriumnitrit versetzt.
Die erhaltene Lösung kühlt man durch Einwerfen von Eis auf 10°C ab und tropft sie in 30 Minuten auf eine Vorlage von 100 Teilen Eis und 60 Teilen konz. Salzsäure (31 %). Man rührt 1 Stunde nach und zerstört den Nitrit-Überschuss durch Zugabe von Amidoschwefelsäure.
23.9 Teile 6-Amino-4-hydroxy-naphthalin-2 sulfonsäure werden in 300 Teilen Wasser durch Zugabe von Natronlauge neutral gelöst. Man erwärmt auf 50°C und trägt 13.4 Teile Formaldehyd-bisulfit (Na-Salz) ein. Nach 30 Minuten Nachrühren kühlt man auf 20°C ab und tropft die Lösung (Verbindung der Formel (6)) in 30 Minuten in die 10°C-kalte Diazotierung.
Es stellt sich ein pH-Wert von 2.0 bis 2.5 ein. Nach 1 Stunde Nachrühren wird mit Sodalösung auf pH 5.5 gestellt und anschließend mit NaH₂PO₄/Na₂HPO₄ gepuffert. Die erhaltene Lösung wird eingedampft.
Man erhält ein rotes Farbstoffpulver dessen Struktur der Formel 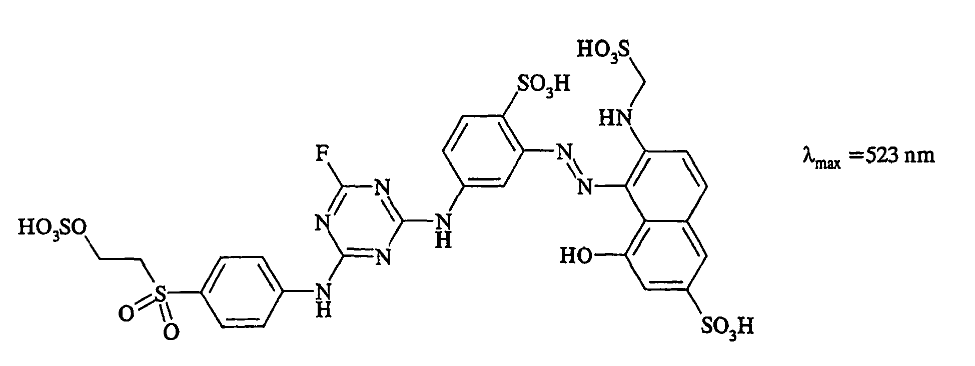 entspricht. Der Farbstoff färbt Baumwolle in stark blaustichig, roten Tönen mit guten Echtheiten, insbesondere hoher Lichtechtheit.

In analoger Weise erhält man die in der nachfolgenden Tabelle angegebenen Beispiele 42 bis 51, indem man zunächst das Amin der Formel (4') mit Trifluortriazin umsetzt und anschließend mit 1,3-Diamino-benzol-4-sulfonsäure oder 1,4-Diaminobenzol-2-sulfonsäure kondensiert. Die beschriebenen Farbstoffe erhält man nach Diazotierung und Kupplung auf die Verbindung der Formel (6).

| Bsp | Amin der Formel (4') | Halogen-triazin | Kondensations-komponente | Farbton | λₘₐₓ |
|---|---|---|---|---|---|
| 42 | 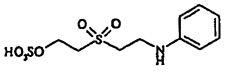 | 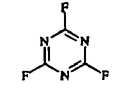 | 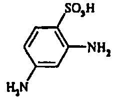 | rot | 521 |
| 43 | 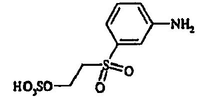 | dto. | dto. | rot | 523 |
| 44* | 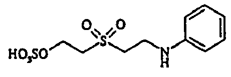 | 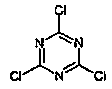 | dto. | rot | 522 |
| 45* | 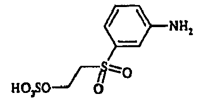 | dto. | dto. | rot | 523 |
| 46 | 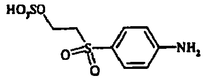 | 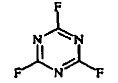 | 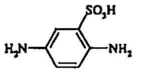 | rot | 528 |
| 47 | 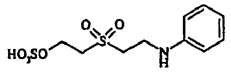 | dto. | dto. | rot | 527 |
| 48 | 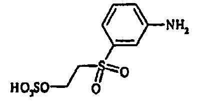 | dto. | dto. | rot | 527 |
| 49* | 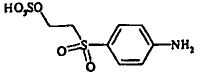 | 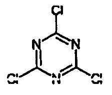 | dto. | rot | 527 |
| 50* | 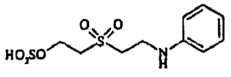 | dto. | dto. | rot | 528 |
| 51* | 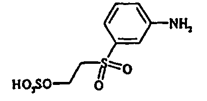 | dto. | dto. | rot | 528 |

| | | | | | |
|---|---|---|---|---|---|
| * nicht erfindungsgemäß | | | | | |

Die Farbstoffe der Beispiele 46, 47, 48, 49 und 51 entsprechen strukturell den Farbstoffe der Beispiele 36, 37, 38, 39 und 40.

### Beispiel 52

Man löst 28.1 Teile 4-(2'-Sulfatoethylsulfonyl)-anilin in 250 Teilen Wasser durch Neutralisation mit festem Natriumhydrogencarbonat. In die Lösung trägt man 92,4 Teile des Farbstoffs des Beispiels 45 ein und stellt den pH-Wert auf 5.5 bis 6.0. Man erwärmt auf 80° bis 90°C und hält den pH-Wert im eingestellten Bereich durch Zugabe von wässriger Sodalösung. Der Reaktionsverlauf wird dünnschichtchromatographisch verfolgt
Nach beendeter Reaktion wird die Farbstofflösung abgekühlt, gepuffert und getrocknet. Man erhät ein dunkelrotes Pulver, dessen Struktur der Formel 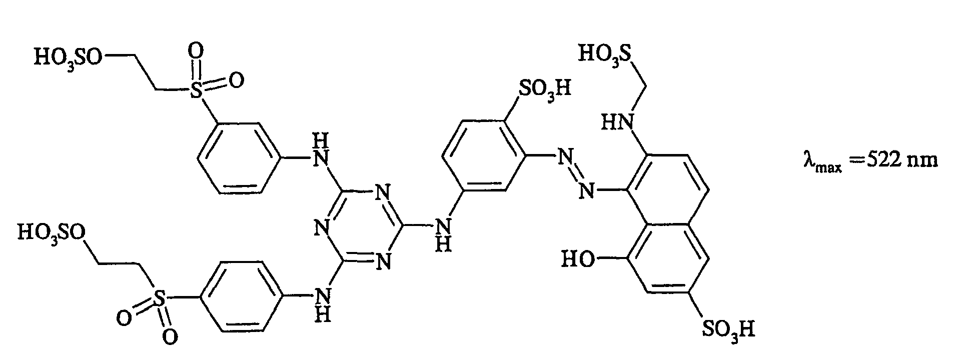 entspricht.
Er färbt Baumwolle mit blaustichig, roter Nuance mit guten Echtheiten, insbesondere hoher Lichtechtheit.

In analoger Weise erhält man die in der nachfolgenden Tabelle angegebenen Beispiele 53 bis 58, indem man die angegebenen Ausgangsfarbstoffe mit einem Amin der Formel (4') kondensiert.

| Bsp. | Ausgangsfarbstoff | Amin der Formel (4') | Farbton | λₘₐₓ |
|---|---|---|---|---|
| 53 | Farbstoff des Beispiels 39 | 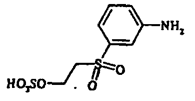 | rot | 531 |
| 54 | Farbstoff des Beispiels 40 | dto. | rot | 530 |
| 55 | Farbstoff des Beispiels 39 | 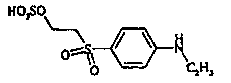 | rot | 531 |
| 56 | Farbstoff des Beispiels 40 | dto. | rot | 530 |
| 57 | Farbstoff des Beispiels 45 | dto. | rot | 524 |
| 58 | Farbstoff des Beispiels 51 | 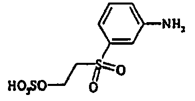 | rot | 522 |

## Patentansprüche

1. Reaktivfarbstoff der allgemeinen Formel (1) 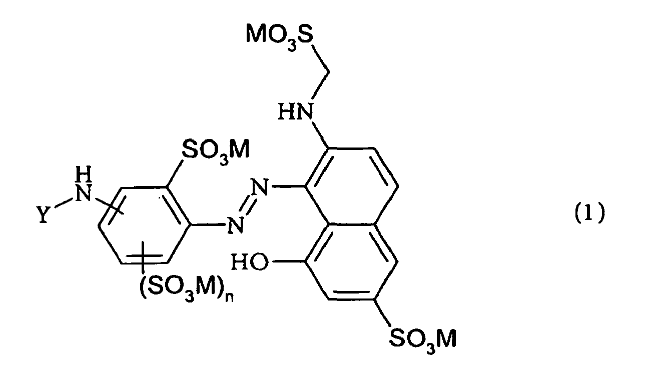 worin
Y für eine heterocyclische Reaktivgruppe der allgemeinen Formel (2) oder (3) 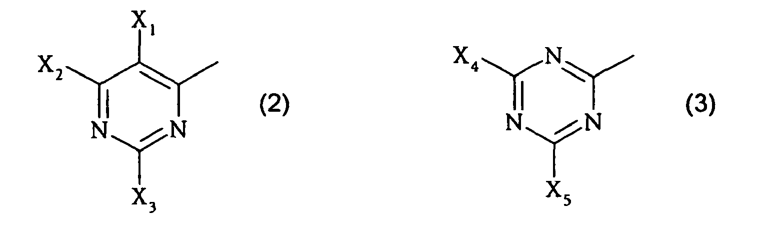 steht, worin
X₁ bis X₃ unabhängig voneinander Wasserstoff, Cyano oder Halogen bedeuten, mit der Maßgabe, dass wenigstens ein Rest X₁ bis X₃ Halogen ist,
X₄ Fluor oder X₅ bedeutet,
X₅ für eine Gruppe der allgemeinen Formel (4) steht 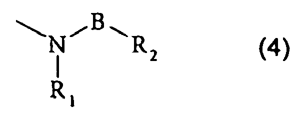 worin
R₁ Wasserstoff, Alkyl oder Aryl bedeutet;
B Alkylen, Arylen oder Arylalkylen bedeutet, wobei Alkylen durch ein Sauerstoffatom unterbrochen sein kann; und
R₂ einen Rest SO₂CH₂CH₂Z oder SO₂CH = CH₂ bedeutet, worin Z für eine Gruppierung steht, die durch Einwirkung von Alkali eliminiert werden kann;
n für 0 oder 1 steht; und
M für Wasserstoff, Ammonium, ein Alkalimetall oder das Äquivalent eines Erdalkalimetalls steht.

2. Reaktivfarbstoff gemäß Anspruch 1, **dadurch gekennzeichnet, daß** n für 0 steht.

3. Reaktivfarbstoff gemäß Anspruch 1 und/oder 2, **dadurch gekennzeichnet, daß** Y für eine heterocyclische Reaktivgruppe der allgemeinen Formel (3),
R₁ für Wasserstoff, (C₁-C₄)-Alkyl oder Phenyl,
B für Ethylen, Propylen oder Phenylen und
R₂ für einen Rest -SO₂CH₂CH₂Z, worin Z Sulfato bedeutet,
stehen.

4. Reaktivfarbstoff gemäß einem oder mehreren der Ansprüche 1 bis 3, **dadurch gekennzeichnet, daß** er die allgemeinen Formel (1a) 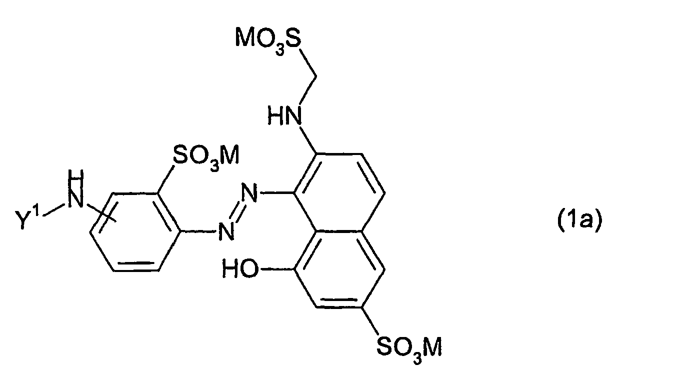 aufweist, worin
M wie in Anspruch 1 angegeben definiert ist und
Y¹ für einen der Reste (2a) bis (2i) 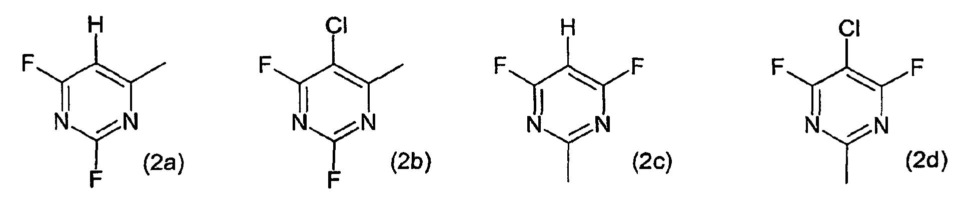 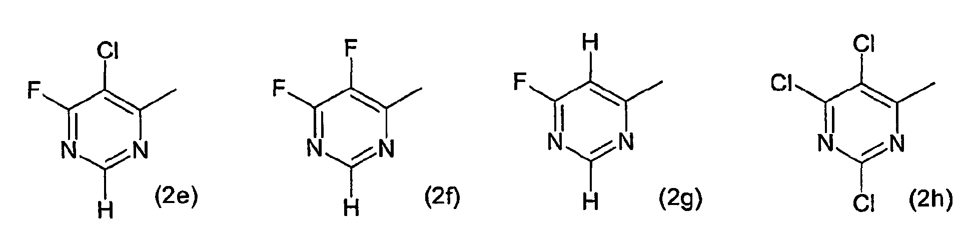 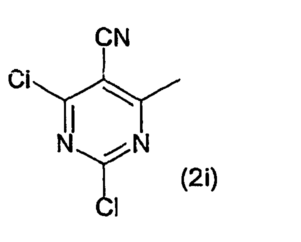 oder (3a) bis (3q) steht 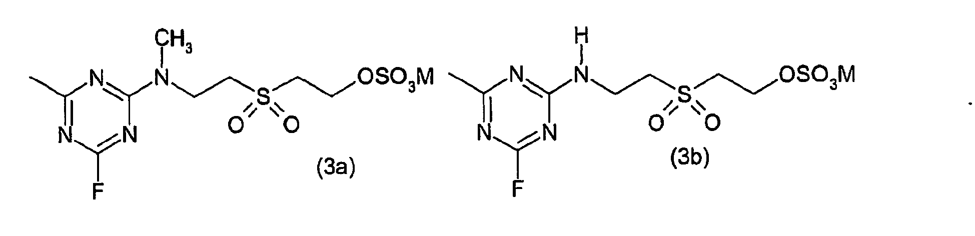 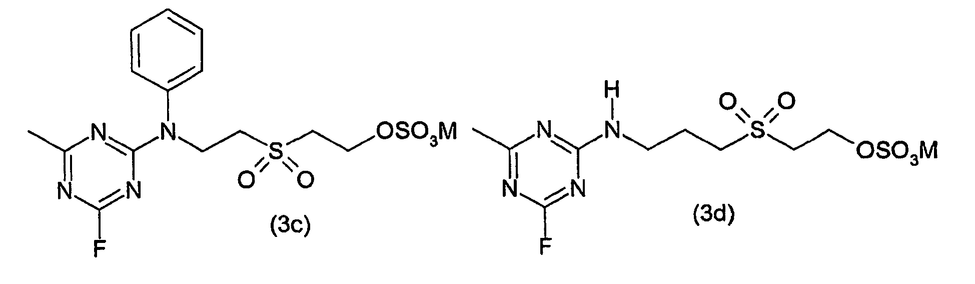 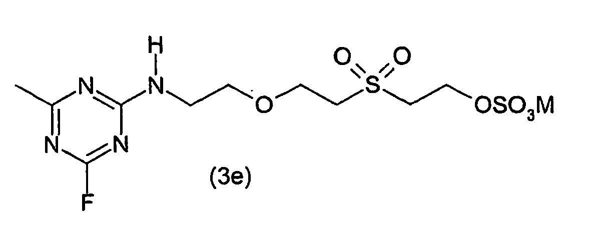 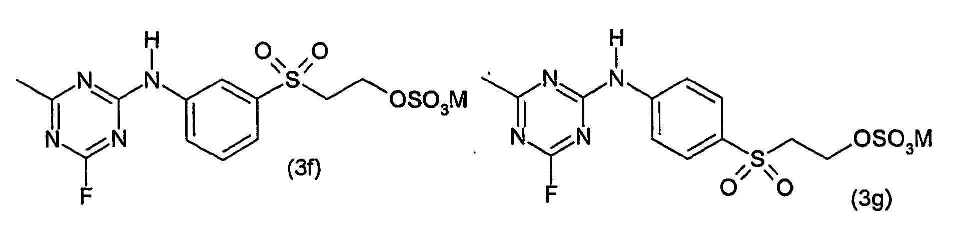 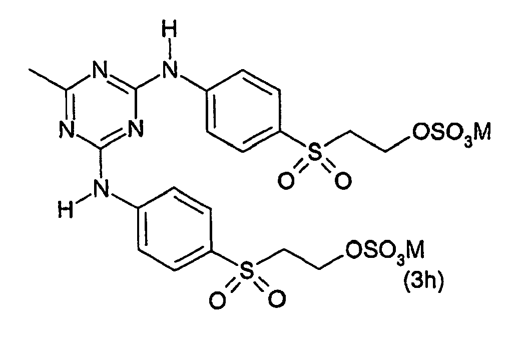 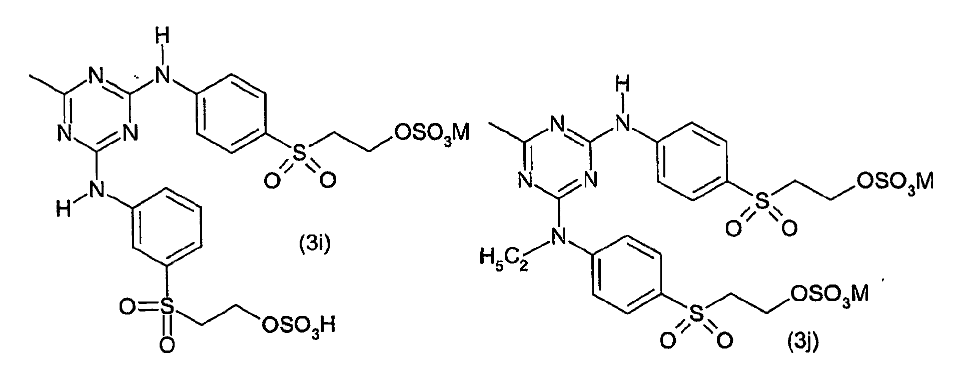 wobei M wie in Anspruch 1 angegeben definiert ist

5. Reaktivfarbstoff gemäß einem oder mehreren der Ansprüche 1 bis 4, **dadurch gekennzeichnet, daß** er eine der Formeln (1b) bis (1e) aufweist 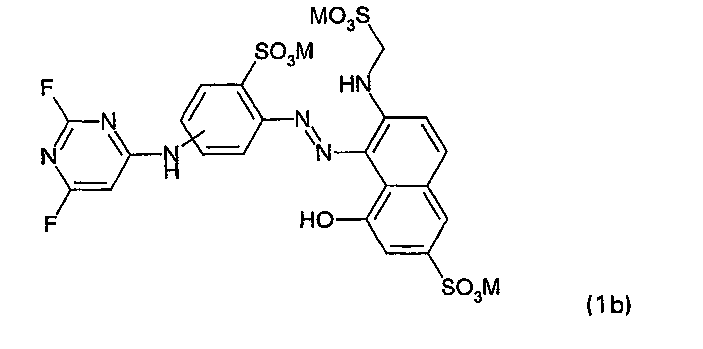 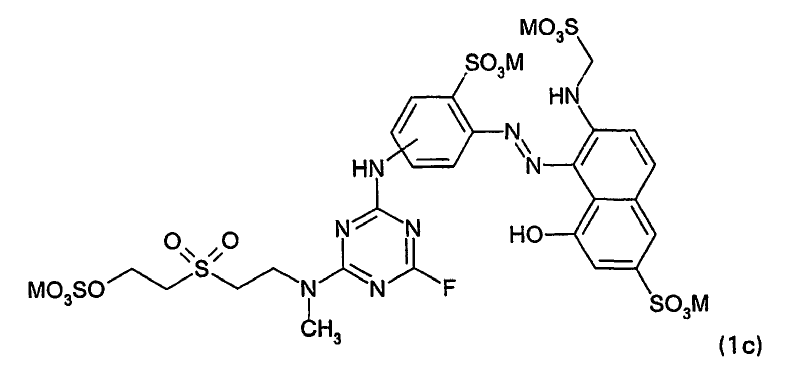 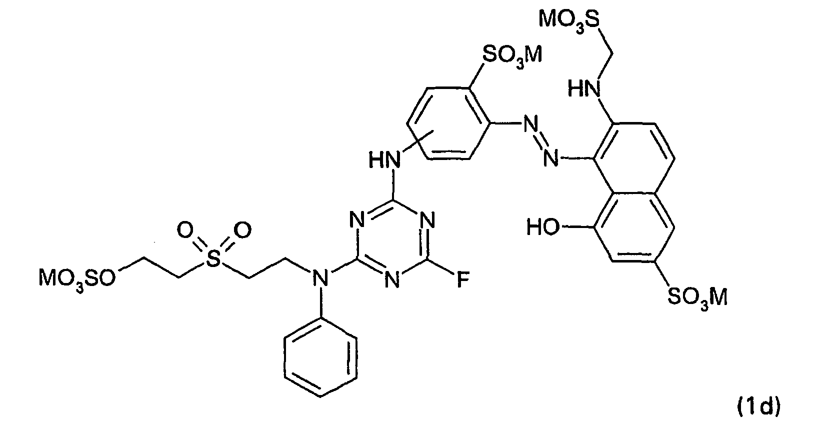 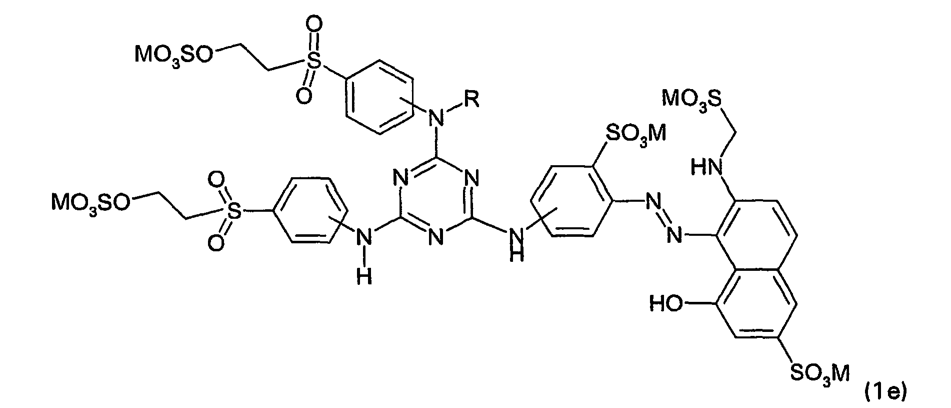 worin R Wasserstoff, Methyl oder Ethyl bedeutet und worin jeweils M wie in Anspruch 1 angegeben definiert ist.

6. Reaktivfarbstoff gemäß einem oder mehreren der Ansprüche 1 bis 5, **dadurch gekennzeichnet, daß** M Wasserstoff oder Natrium bedeutet.

7. Verfahren zur Herstellung eines Reaktivfarbstoffes gemäß einem oder mehreren der Ansprüche 1 bis 6, **dadurch gekennzeichnet, daß** er durch Umsetzung der Verbindungen der Formeln (6), (7) und (2') bzw. (6), (7), (4') und Trifluortriazin 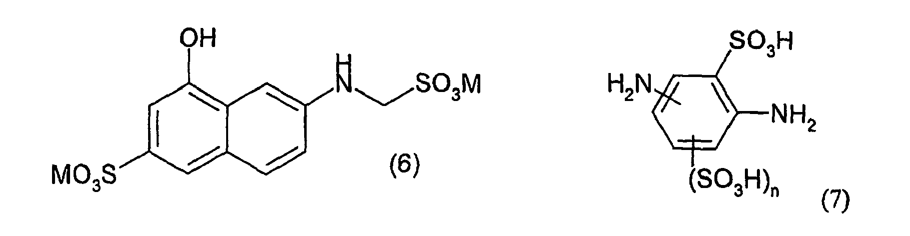 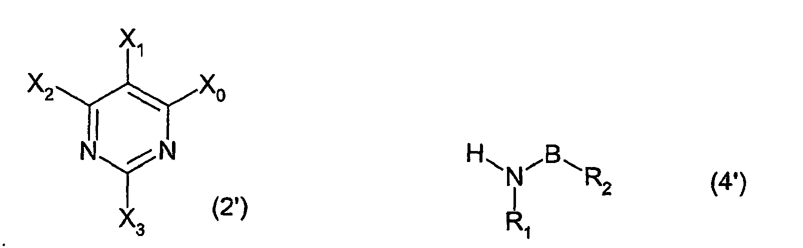 worin M, n, R₁, R₂, B, X₁, X₂, X₃ wie oben angegeben definiert sind und X₀ für Fluor oder Chlor steht, in an sich bekannten Diazotierungs-, Kupplungs- und Kondensationsreaktionen in an sich beliebiger Reihenfolge aufgebaut wird.

8. Verfahren gemäß Anspruch 7, **dadurch gekennzeichnet, daß** eine Verbindung der allgemeinen Formel (8) 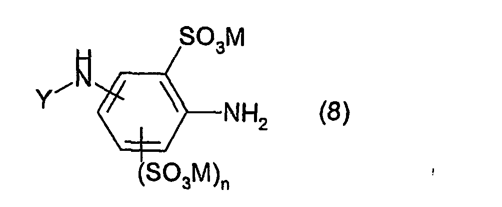 worin Y, M und n wie in Anspruch 1 angegeben definiert sind, diazotiert und mit einer Verbindung der Formel (6) umgesetzt wird.

9. Verfahren gemäß Anspruch 7, **dadurch gekennzeichnet, daß** eine Verbindung der allgemeinen Formel (9) 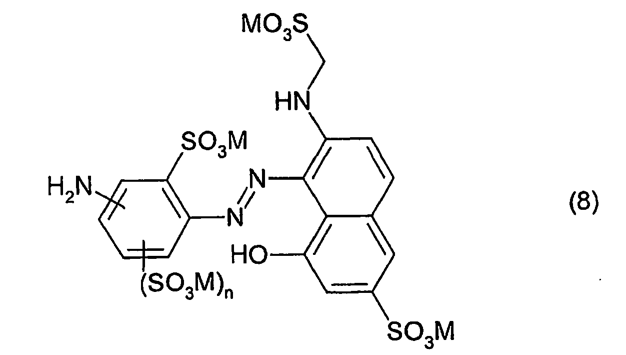 in der M und n wie in Anspruch 1 angegeben definiert sind, mit einem Halogenpyrimidin der allgemeinen Formel (2') oder mit einem Triazin der allgemeinen Formel (3') 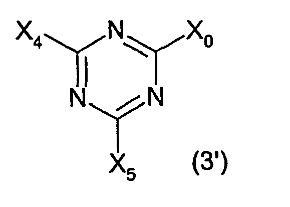 worin X₄ und X₅ wie in Anspruch 1 angegeben definiert sind und X₀ Fluor oder Chlor bedeutet, kondensiert werden.

10. Verwendung eines Reaktivfarbstoffes gemäß einem oder mehreren der Ansprüche 1 bis 6 zum Färben und Bedrucken von hydroxy- und/oder carbonamidgruppenhaltigem Material, insbesondere Fasermaterial.

## Claims

1. A reactive dye of the general formula (1) 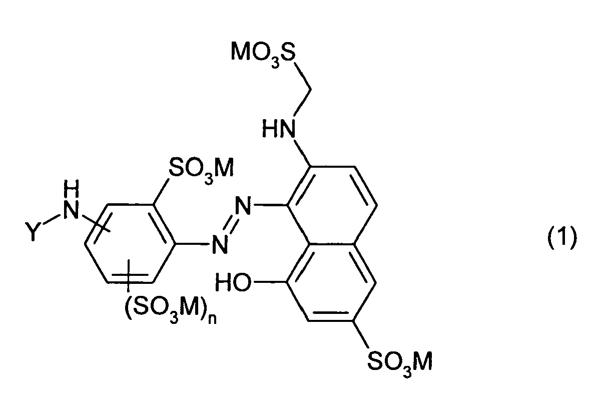 where
Y is a heterocyclic reactive group of the general formula (2) or (3) 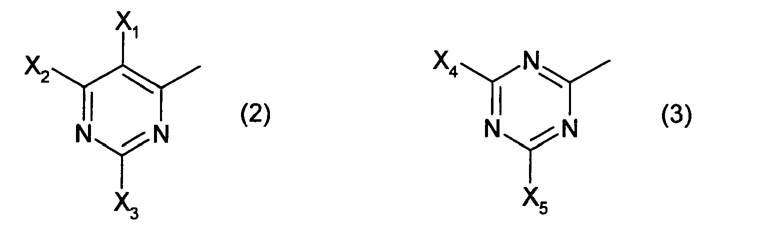 where
X₁ to X₃ are independently hydrogen, cyano or halogen, with the proviso that at least one of X₁ to X₃ is halogen,
X₄ is fluorine or X₅,
X₅ is a group of the general formula (4) 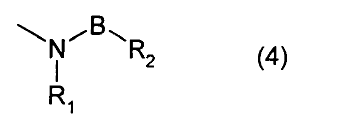 where
R₁ is hydrogen, alkyl or aryl;
B is alkylene, arylene or arylalkylene, and B alkylene may be interrupted by an oxygen atom; and
R₂ is an SO₂CH₂CH₂Z or SO₂CH=CH₂ radical, where Z is an alkali-eliminable moiety;
n is 0 or 1; and
M is hydrogen, ammonium, an alkali metal or the equivalent of an alkaline earth metal.

2. A reactive dye as claimed in claim 1, wherein n is 0.

3. A reactive dye as claimed in claim 1 and/or 2, wherein
Y is a heterocyclic reactive group of the general formula (3),
R₁ is hydrogen, (C₁-C₄)-alkyl or phenyl,
B is ethylene, propylene or phenylene and
R₂ is an -SO₂CH₂CH₂Z radical where Z is sulfato.

4. A reactive dye as claimed in one or more of claims 1 to 3, conforming to the general formula (1a) 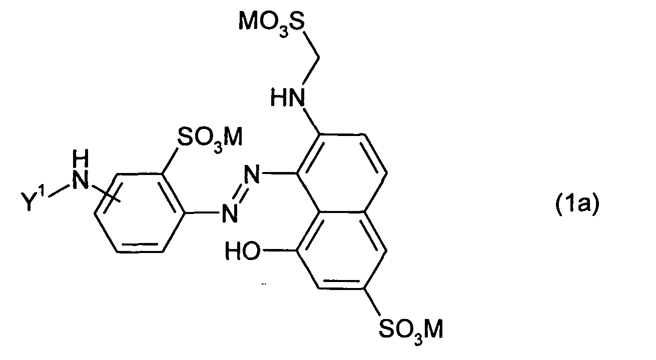 where
M is as defined in claim 1 and
Y¹ is one of the radicals (2a) to (2i) 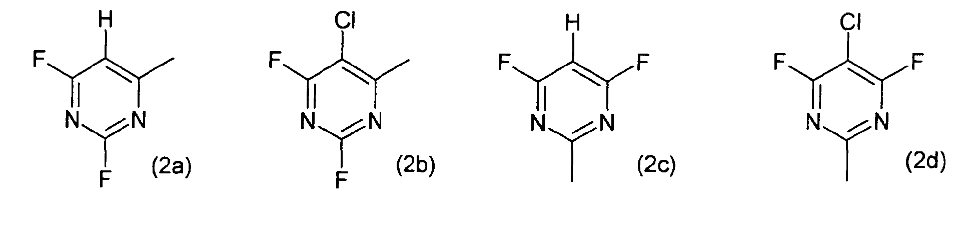 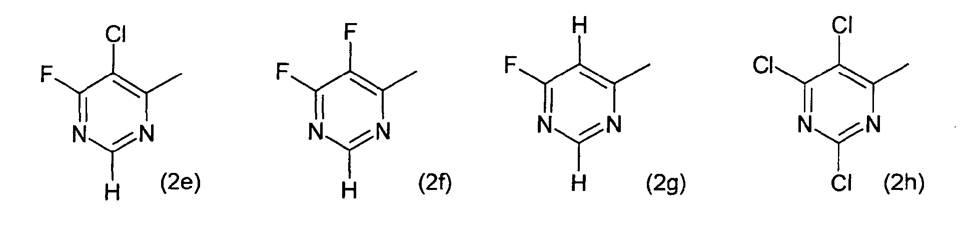 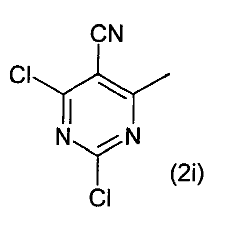 or (3a) to (3q) 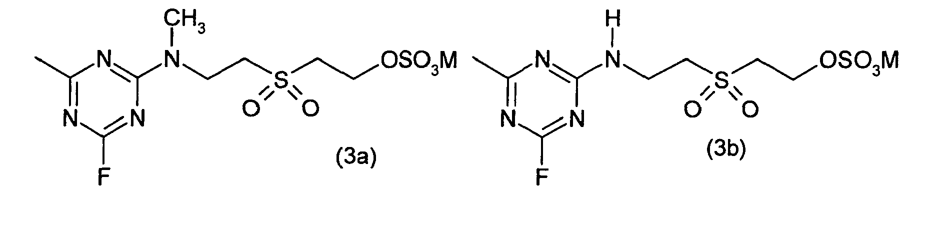 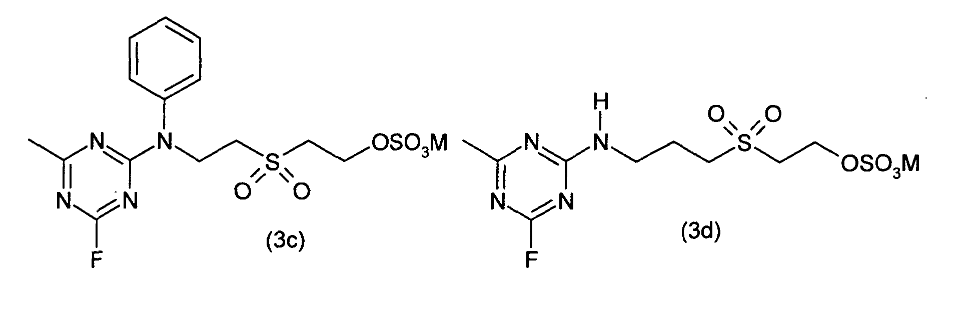 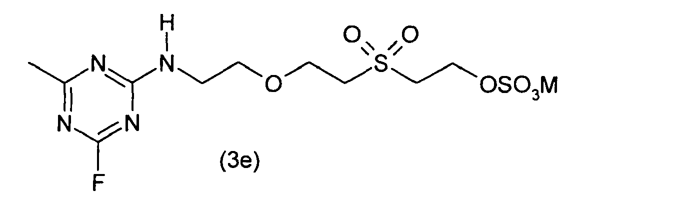 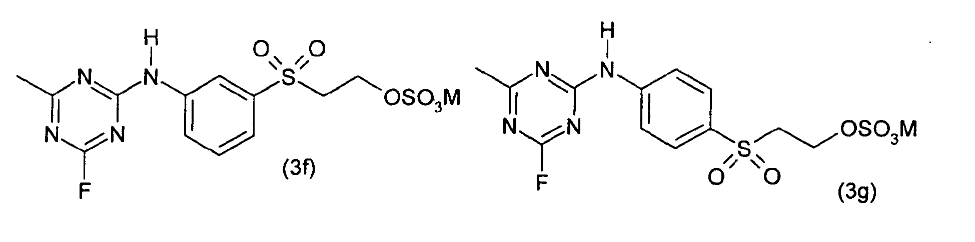 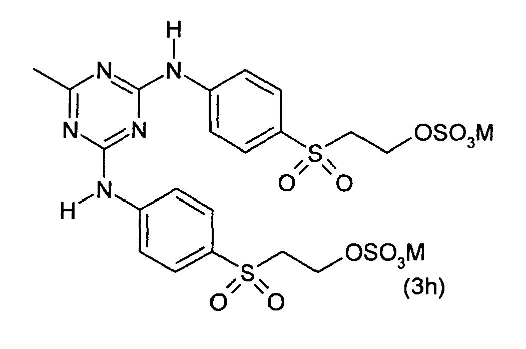 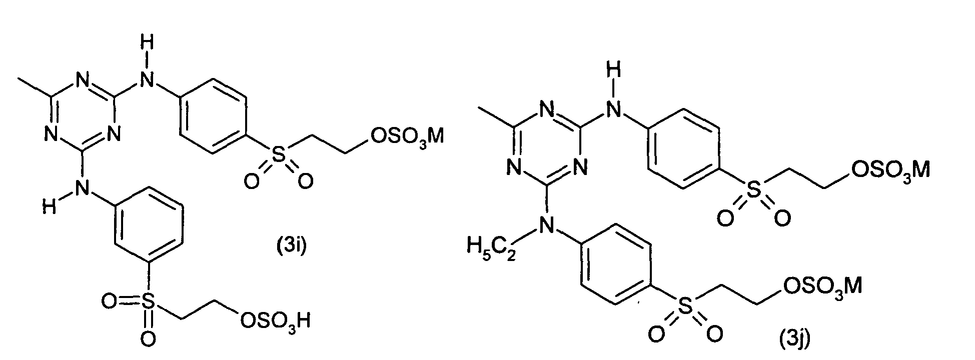 where M is as defined in claim 1.

5. A reactive dye as claimed in one or more of claims 1 to 4, conforming to one of the formulae (1b) to (1e) 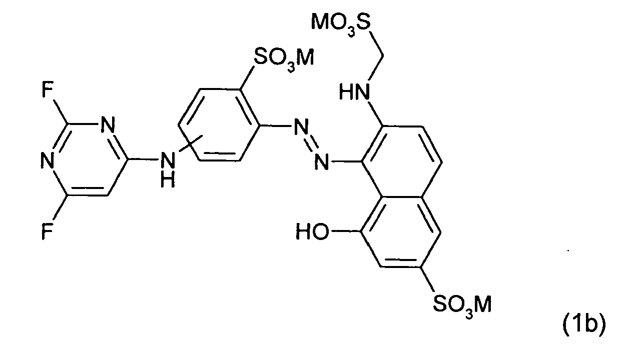 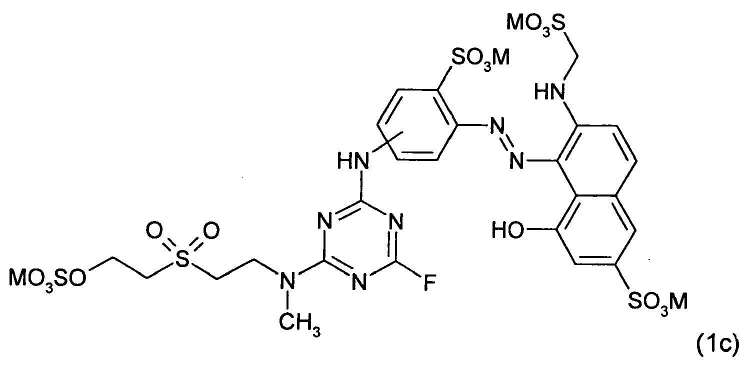 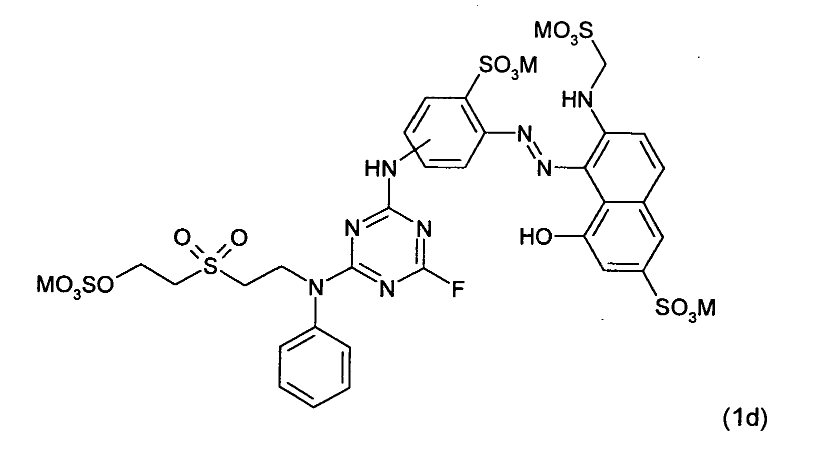 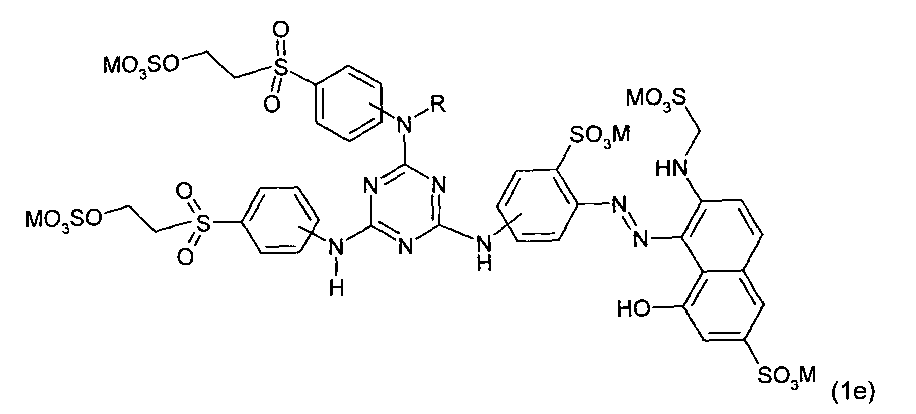 where R is hydrogen, methyl or ethyl and M is as defined in claim 1.

6. A reactive dye as claimed in one or more of claims 1 to 5, wherein M is hydrogen or sodium.

7. A process for preparing a reactive dye as claimed in one or more of claims 1 to 6, which comprises constructing it by reacting the compounds of the formulae (6), (7) and (2') or (6), (7), (4') and trifluorotriazine 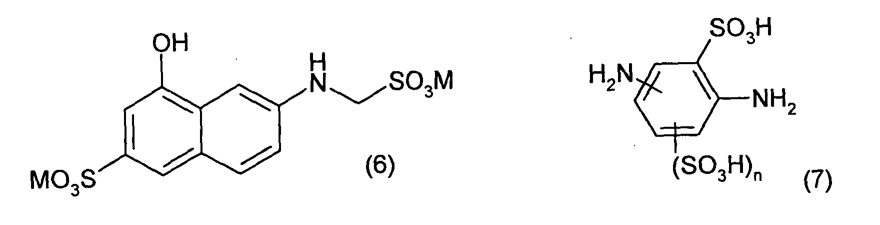 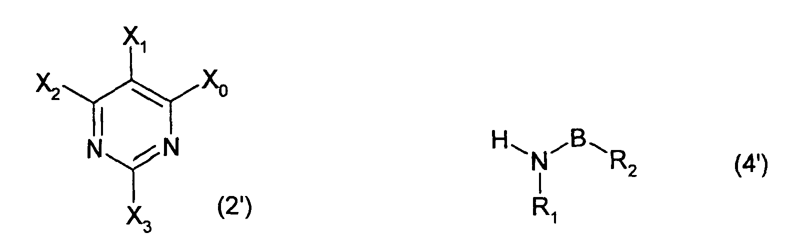 where M, n, R₁, R₂, B, X₁, X₂, X₃ are each as defined above and X₀ is fluorine or chlorine, in any desired order in conventional diazotization, coupling and condensation reactions.

8. The process of claim 7, wherein a compound of the general formula (8) 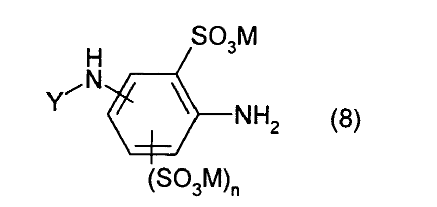 where Y, M and n are each as defined in claim 1, is diazotized and reacted with a compound of the formula (6).

9. The process of claim 7, wherein a compound of the general formula (9) 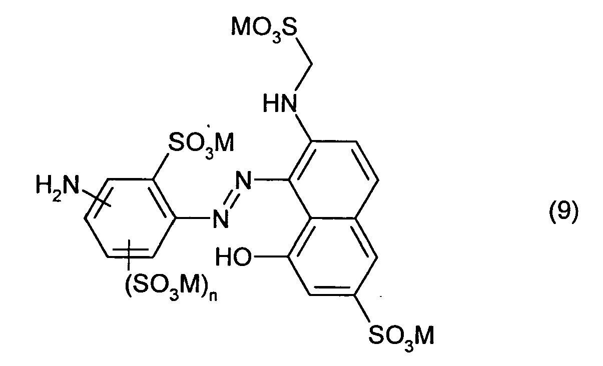 where M and n are each as defined in claim 1, is condensed with a halopyrimidine of the general formula (2') or with a triazine of the general formula (3') 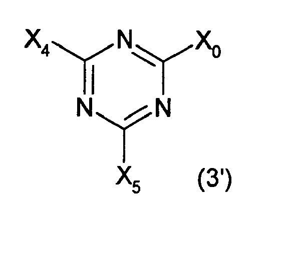 where X₄ and X₅ are each as defined in claim 1 and X₀ is fluorine or chlorine.

10. The use of a reactive dye as claimed in one or more of claims 1 to 6 for dyeing and printing hydroxyl- and/or carboxamido-containing material, especially fiber material.

## Revendications

1. Colorant réactif de formule générale (1) 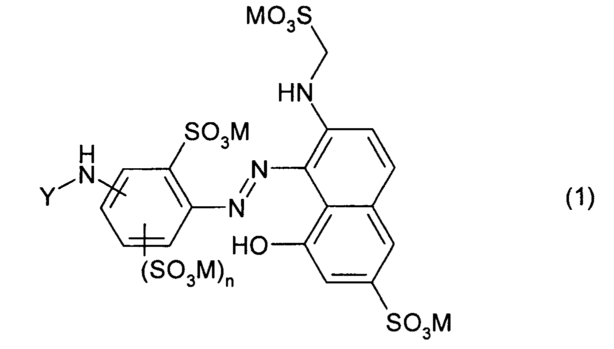 dans laquelle
Y représente un groupe réactif hétérocyclique de formule générale (2) ou (3) 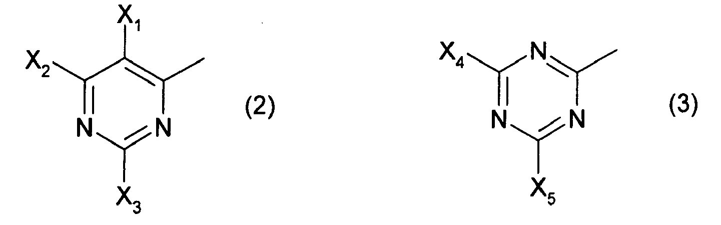 dans laquelle
X₁ à X₃ représentent, indépendamment les uns des autres, un hydrogène, un cyano ou un halogène, à condition qu'au moins l'un des radicaux X₁ à X₃ soit un halogène,
X₄ représente un fluor ou X₅,
X₅ représente un groupe de formule générale (4) 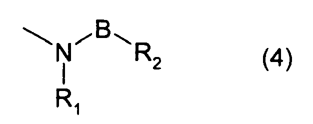 dans laquelle
R₁ représente un hydrogène, un alkyle ou un aryle ;
B représente un alkylène, un arylène ou un arylalkylène, où l'alkylène peut être interrompu par un atome d'oxygène ; et
R₂ représente un radical SO₂CH₂CH₂Z ou SO₂CH=CH₂, où Z représente un groupement qui peut être éliminé par l'action d'un alcali ;
n vaut 0 ou 1 ; et
M représente un hydrogène, un ammonium, un métal alcalin ou l'équivalent d'un métal alcalino-terreux.

2. Colorant réactif selon la revendication 1, **caractérisé en ce que** n vaut 0.

3. Colorant réactif selon la revendication 1 et/ou 2, **caractérisé en ce que**
Y représente un groupe réactif hétérocyclique de formule générale (3),
R₁ représente un hydrogène, un alkyle en C₁-C₄ ou un phényle,
B représente un éthylène, un propylène ou un phénylène, et
R₂ représente un radical -SO₂CH₂CH₂Z, dans lequel Z représente un sulfate.

4. Colorant réactif selon l'une ou plusieurs des revendications 1 à 3, **caractérisé en ce qu'**il présente la formule générale (1a) 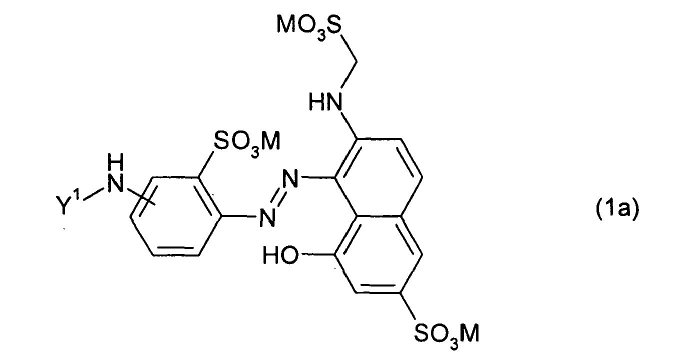 dans laquelle
M est défini comme indiqué dans la revendication 1, et
Y¹ représente l'un des radicaux (2a) à (2i) 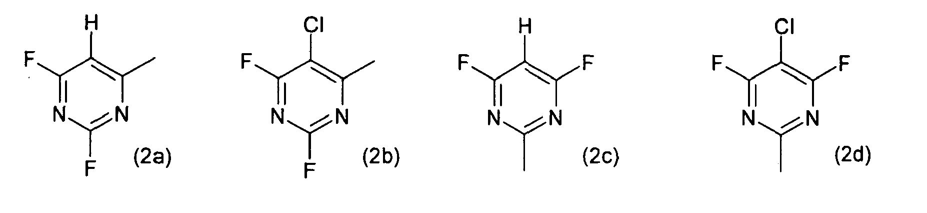 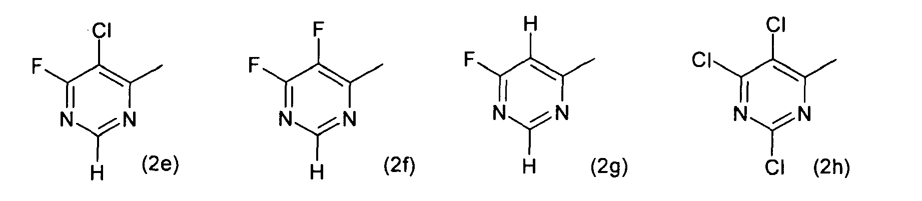 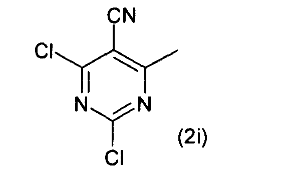 ou (3a) à (3q) 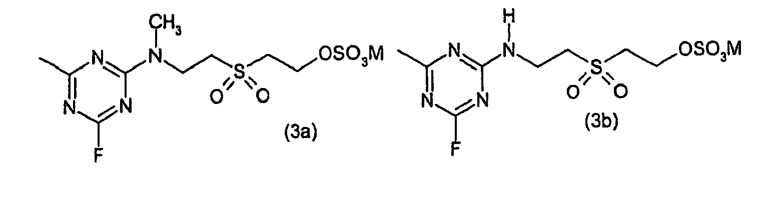 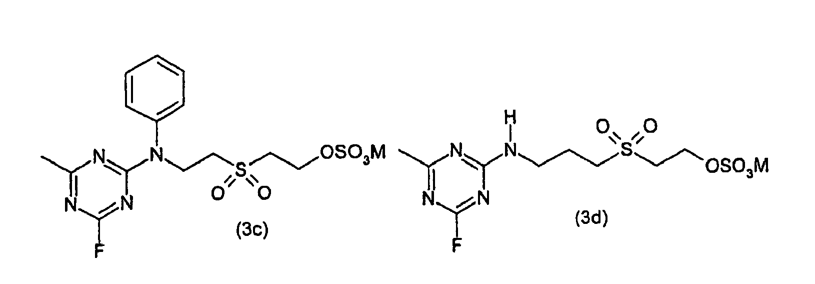 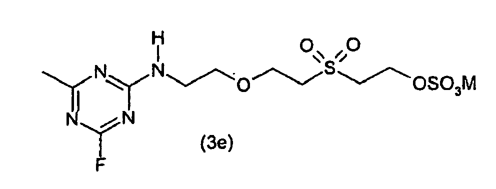 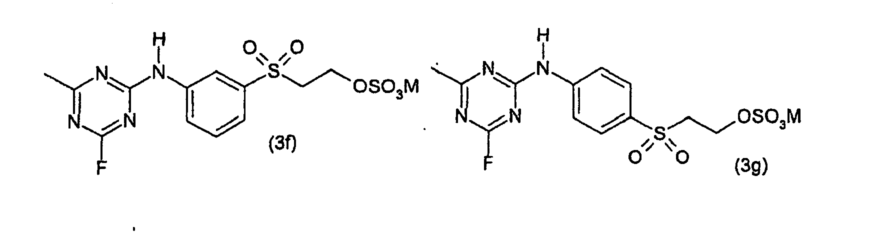 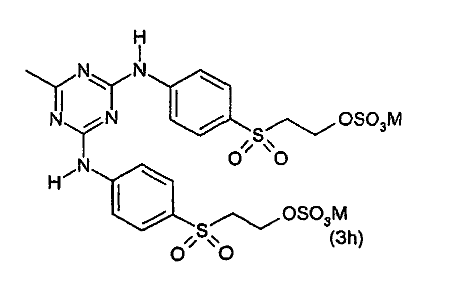 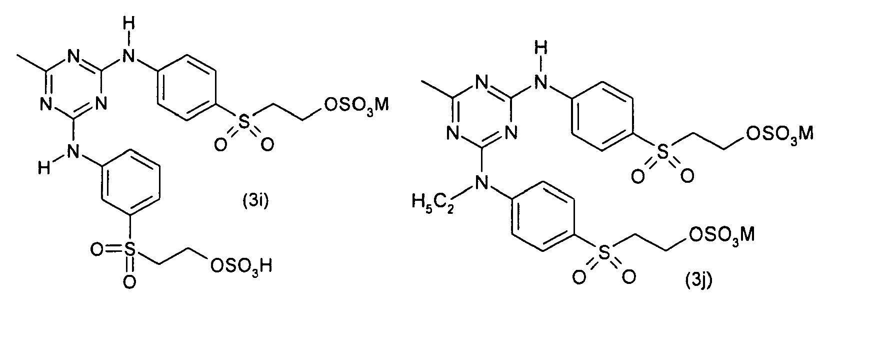 dans lesquelles M est défini comme indiqué dans la revendication 1.

5. Colorant réactif selon l'une ou plusieurs des revendications 1 à 4, **caractérisé en ce qu'**il présente l'une des formules (1b) à (1e) 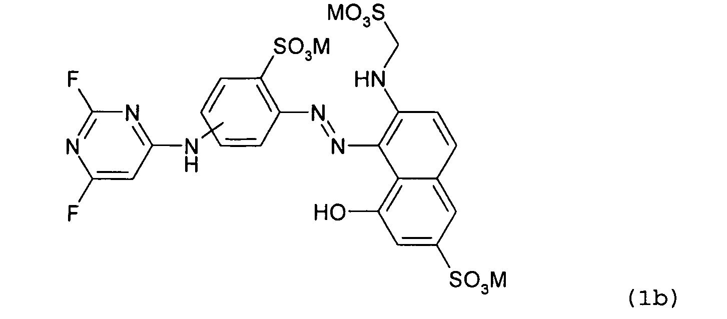 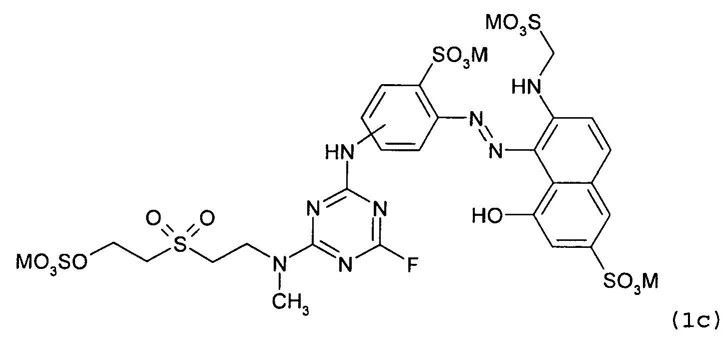 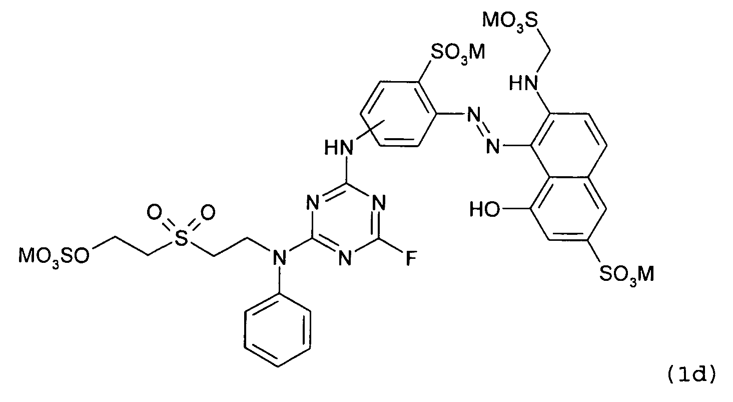 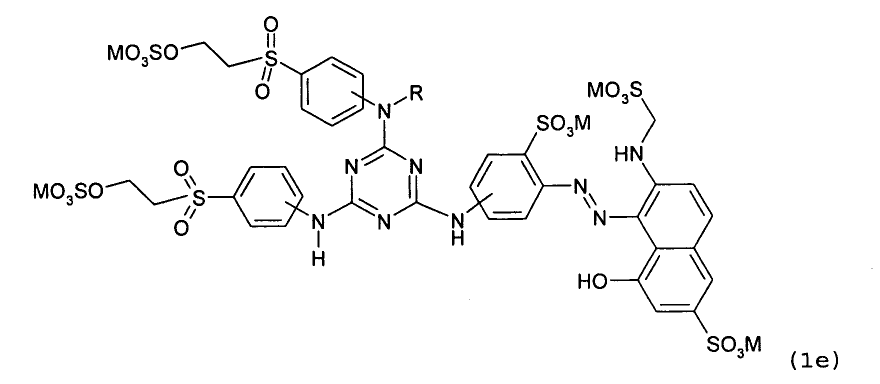 dans lesquelles R représente un hydrogène, un méthyle ou un éthyle, et dans lesquelles chaque M est défini comme indiqué dans la revendication 1.

6. Colorant réactif selon l'une ou plusieurs des revendications 1 à 5, **caractérisé en ce que** M représente un hydrogène ou un sodium.

7. Procédé de préparation d'un colorant réactif selon l'une ou plusieurs des revendications 1 à 6, **caractérisé en ce qu'**il est synthétisé par réaction des composés de formules (6), (7) et (2') ou (6), (7), (4') et de trifluorotriazine 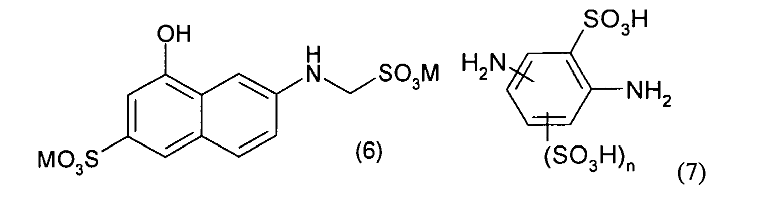 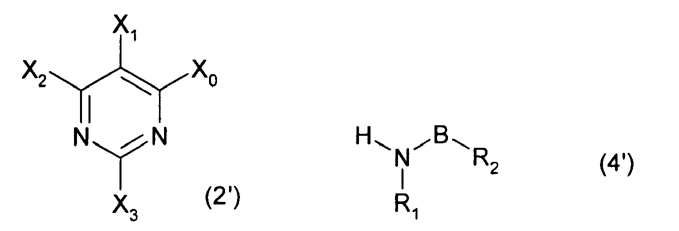 dans lesquelles M, n, R₁, R₂, B, X₁, X₂, X₃ sont définis comme indiqué ci-dessus et X₀ représente un fluor ou un chlore, dans des réactions de diazotation, de couplage et de condensation connues en soi, dans une séquence quelconque en soi.

8. Procédé selon la revendication 7, **caractérisé en ce qu'**un composé de formule générale (8) 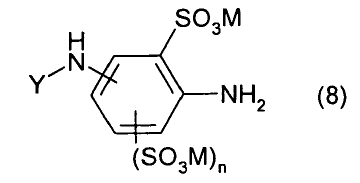 dans laquelle Y, M et n sont définis comme indiqué dans la revendication 1, est diazoté et mis à réagir avec un composé de formule (6).

9. Procédé selon la revendication 7, **caractérisé en ce qu'**un composé de formule générale (9) 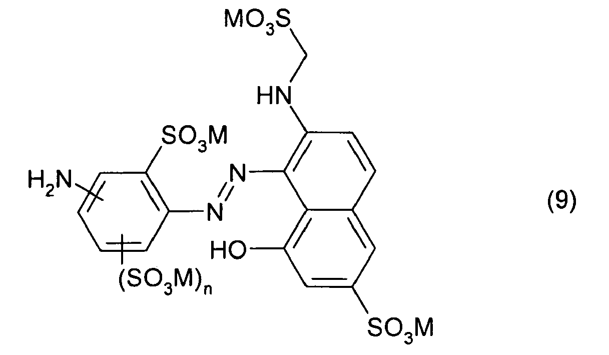 dans laquelle M et n sont définis comme indiqué dans la revendication 1, est condensé avec une halogénopyrimidine de formule générale (2') ou avec une triazine de formule générale (3') 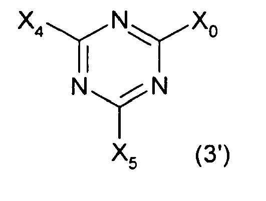 dans laquelle X₄ et X₅ sont définis comme indiqué dans la revendication 1 et X₀ représente un fluor ou un chlore.

10. Utilisation d'un colorant réactif selon l'une ou plusieurs des revendications 1 à 6 pour la teinture ou l'impression d'une matière renfermant des groupes hydroxy et/ou carboxamide, en particulier d'une matière fibreuse.
